# EUROPÄISCHE PATENTANMELDUNG

(11) **EP 4 603 461 A1**
(43) Veröffentlichungstag der Anmeldung: **20.08.2025**
(21) Anmeldenummer: 25151653.0
(22) Anmeldetag: 14.01.2025
(51) Int. Cl.: C02F 1/68, C02F 1/76, C02F 5/02, E04H 4/12, C02F 103/42

(54) **VERFAHREN UND DOSIERANLAGE ZUR DOSIERUNG VON CALCIUMHYPOCHLORIT IN EIN WASSERSYSTEM**

(30) Priorität: 15.02.2024 DE 102024104278; 04.07.2024 DE 202024103698 U
(71) Anmelder: Witty GmbH & Co. KG, 86424 Dinkelscherben (DE)
(72) Erfinder: Weber, Philipp, 86356 Neusäß (DE)
(74) Vertreter: Charrier Rapp & Liebau

(57) **Zusammenfassung**

Die Erfindung betrifft ein Verfahren und eine Dosieranlage zur Dosierung von Calciumhypochlorit in ein Wassersystem, insbesondere in Schwimmbadwasser, in denen die Herstellung einer wässrigen Lösung oder Suspension durch Zugabe einer festen, Calciumhypochlorit enthaltenden Komposition in Prozesswasser sowie ein Einleiten der wässrigen Lösung oder Suspension in das Wassersystem erfolgt. Zur Vermeidung von Verstopfungen in Rohrleitungen, Pumpen und Behältern der Dosieranlage, die insbesondere durch die Bildung von Chlorschlamm und Ablagerungen davon hervorgerufen werden, wird vor der Zugabe der Komposition das Prozesswasser durch einen Behälter (4) geleitet, in dem ein Granulat eines Mediums enthalten ist, welches in dem Prozesswasser eine katalytische Fällung von im Prozesswasser gelösten, härtebildenden Ionen durch Bildung von Impfkristallen, insbesondere von Calciumcarbonat- und/oder Magnesiumcarbonat-Kristallen, bewirkt.

## Beschreibung

### TECHNISCHES GEBIET

Die Erfindung betrifft ein Verfahren sowie eine Dosieranlage zur Dosierung von Calciumhypochlorit in ein Wassersystem, gemäß den Oberbegriffen der unabhängigen Ansprüche 1 und 9.

Aus der DE 10 2020 108 167 B4 ist eine Dosier- und Mischanlage zur Herstellung einer chlorhaltigen Lösung oder Suspension aus einem chlorhaltigen, rieselfähigen Feststoff, bei dem es sich insbesondere um Calciumhypochlorit-Granulat handeln kann, bekannt. Die bekannte Dosier- und Mischanlage umfasst einen Mischbehälter mit einem Wasserzulauf und einem Materialzulauf für den rieselfähigen Feststoff, über den insbesondere Calciumhypochlorit-Granulat in den Mischbehälter geleitet und darin mit über den Wasserzulauf eingeleitetem Wasser in eine wässrige Lösung oder Suspension umgesetzt werden kann. Die auf diese Weise erzeugte chlorhaltige wässrige Lösung oder Suspension kann anschließend einem Wassersystem, beispielsweise Schwimmbadwasser, zur Aufbereitung und insbesondere zur Desinfektion und Entkeimung des Wassers zugeführt werden. In dem Mischbehälter wird in Abhängigkeit der Löslichkeit des dem Prozesswasser zugegebenen Feststoff eine wässrige Lösung oder eine Suspension des Feststoffs im Prozesswasser gebildet. Wenn als Feststoff Calciumhypochlorit eingesetzt wird, entsteht, je nach Löslichkeit der verwendeten Calciumhypochlorit-Komposition, eine wässrige Lösung oder eine Suspension des Calciumhypochlorits in dem Prozesswasser. Die Löslichkeit des zugegebenen Calciumhypochlorit-Granulats hängt dabei von der Komposition des Calciumhypochlorit-haltigen Feststoffs ab.

Aus dem Stand der Technik sind Calciumhypochlorit-Kompositionen, die zur Aufbereitung von Wasser, wie z.B. zur Desinfektion und Entkeimung von Schwimmbadwasser eingesetzt werden können, bekannt. Bekannte Calciumhypochlorit-Kompositionen enthalten neben dem Calciumhypochlorit bis zu 10 Gew.-% Kalk (Calciumcarbonat), wobei der Kalkanteil die Abgabezeit des Chlors aus dem Calciumhypochlorit in das Prozesswasser verlängern kann. Die Zugabe von Kalk in Calciumhypochlorit-Kompositionen bereitet jedoch in der Verwendung von Calciumhypochlorit-Kompositionen in Dosier- und Mischanlagen zur Umsetzung des Calciumhypochlorits in eine wässrige Lösung oder Suspension erhebliche Probleme. Insbesondere kann es aufgrund der hohen Kalkzusätze und des daraus resultierenden Calcium-Überschusses in den wässrigen Lösungen oder Suspensionen zu Ausfällungen von schwer löslichen Calciumverbindungen, wie beispielsweise Calciumcarbonat (Kalk), Calciumsulfat (Gips) oder Calciumhydroxid kommen. Derartige ungelöste oder schwer lösliche Calciumverbindungen in der wässrigen Lösung oder Suspension können zu Störungen in der Dosier- und Mischanlage führen, da die ungelösten Partikel dieser Calciumverbindungen die Rohrleitungen oder Fördermittel der Dosier- und Mischanlage, wie z.B. Pumpen, verstopfen können. Durch diese Verstopfungen in Rohrleitungen oder anderen Komponenten der Dosier- und Mischanlage kommt es zu Dosierunterbrechungen. Dies führt zum einen zu einer unzureichenden Desinfektion des behandelten Wassers und erfordert zum anderen einen hohen Aufwand zur Beseitigung der Dosierunterbrechungen und der Verstopfungen in der Dosier- und Mischanlage.

Zu Verstopfungen in der Dosier- und Mischanlage kann es insbesondere kommen, wenn die zur Herstellung der wässrigen Chlor- Lösung oder Suspension eingesetzten Calciumhypochlorit-Kompositionen eine schlechte Qualität aufweisen. Eine schlechte Qualität von Calciumhypochlorit-Kompositionen zeigt sich bspw. in einem niedrigen Anteil des Aktivchlorgehalts in der hergestellten Lösung oder Suspension (bei gleicher Menge der eingesetzten Calciumhypochlorit-Komposition) und in einem hohen Gehalt an in Wasser nicht löslichem Calciumhydroxid (Ca(OH)₂) sowie Kalk (Ca(Co₃)) in der Komposition. Auch Fremdstoffe, wie z.B. Abriebe aus dem Herstellprozess, Additive oder Sande können in der Lösung oder Suspension enthalten sein.

Die schlechte Qualität von Calciumhypochlorit-Kompositionen erhöht dadurch einerseits den Verbrauch an Material und führt andererseits zur Bildung von Chlorschlamm, der sich insbesondere am Boden des Mischbehälters, in dem die wässrige Lösung oder Suspension erzeugt wird, sowie in Dosierleitungen und Einbauteilen wie Rückschlagventilen oder Impfstellen absetzt und anlagert. Der Chlorschlamm wird dabei während der Herstellung der Lösung in Schwebe gehalten, bspw. durch ein im Suspensionsbehälter angeordnetes Rührwerk. Bei der Einmischung der Lösung oder Suspension in einen Volumenstrom des Wassersystems, bspw. über einen Bypass, kann es zu einem verzögerten Ausfall von Chlorschlamm kommen, insbesondere aufgrund einer abrupten Änderung des pH-Werts in der Lösung/Suspension bei Einleiten in das Wasser des Wassersystems.

Zur Beseitigung von ungelösten oder schwer löslichen Calciumverbindungen in Calciumhypochlorit-Lösungen oder -Suspensionen ist in der DE 10 2006 045 109 A1 vorgeschlagen worden, die ungelösten oder schwer löslichen Calciumverbindungen durch Zugabe von Säuren, beispielsweise von Salzsäure, in Lösung zu bringen. Dies ist allerdings umweltschädlich und für das Bedienpersonal der Dosier- und Mischanlage gesundheitsgefährdend. Weiterhin soll gemäß DIN 19643-1:2023-06, Nr. 11.1- das Vermischen von sauren pH-Wert-Korrekturmitteln mit Calciumhypochlorit oder Natriumhypochlorit- Lösung wegen der Freisetzung von Chlorgas unbedingt vermieden werden.

Aus der DE 10 2013 111 150 A1 ist eine wässrige Suspension von Calciumhypochlorit mit einem Zusatzstoff umfassend Komplexierungsmittel, ausgewählt aus der Gruppe von Polyphosphaten, Phosphonaten und/oder Polycarboxylaten, Wasser und ggf. eine Base bekannt. Mit dem Zusatzmittel wird eine im Wesentlichen vollständige Dispergierung der festen Calciumhypochlorit-Partikel und der wasserunlöslichen Begleitstoffe in der Suspension bewirkt.

Nachteilig bei der Verwendung solcher Zusatzstoffe zur Beigabe in eine Calciumhypochlorit-Komposition oder eine wässrige Lösung davon ist der damit verbundene Zusatzaufwand für die Dosierung der Zusatzstoffe, die damit verbundenen Herausforderung einer korrekten Dosiermenge, sowie die zusätzlichen Betriebsmittel (Zusatzstoffe und Dosiervorrichtungen) die dafür eingesetzt werden müssen mit einer dafür erforderlichen Zulassung zur Badewasseraufbereitung.

Es wurde bei Verwendung von Calciumhypochlorit-Kompositionen mit ungenügender Qualität insbesondere beobachtet, dass sich nicht oder schwer lösliche Calciumverbindungen an den Wänden des Mischbehälters oder anderer Behälter sowie Wandungen von Dosier-/ Leitungen einer Dosier- und Mischanlage in Form von Platten ablagern. Diese Platten können beim Betrieb der Dosier- und Mischanlage von den Wänden abplatzen und die abgeplatzten Platten können Schäden oder Verstopfungen in den Pumpen oder anderen Einbauteilen der Anlage hervorrufen. Neben der Plattenbildung ist ein Zuwachsen von Leitungen und Impfstellen zu beobachten.

Zu besonders gravierenden Problemen hinsichtlich einer Verstopfung von Leitungen und Komponenten einer Dosier- und Mischanlage zur Herstellung und Dosierung einer Calciumhypochlorit-Lösung oder -Suspension in ein Wassersystem kann es kommen, wenn das zur Umsetzung der wässrigen Lösung oder Suspension eingesetzte Calciumhypochlorit-Granulat einen hohen Staubanteil und insbesondere eine hohe Menge von Calciumhypochlorit-Partikeln mit einem Partikeldurchmesser von < 150 µm aufweist. In solchen Fällen erweist sich die Löslichkeit des Calciumhypochlorit-Granulats als unzureichend, mit der Folge, dass es häufig zu Verstopfungen kommt. Zur Vermeidung solcher Verstopfungen, die auf einem hohen Staubanteil in der Korngrößenverteilung des verwendeten Calciumhypochlorit-Granulats basieren, werden in den Dosier- und Mischanlagen häufig Filter integriert, die jedoch bei sehr hohen Staubanteilen an ihre Grenzen stoßen, weil die eingesetzten Filter nicht in der Lage sind, die kleinen Staubpartikel des Calciumhypochlorit-Granulats mit Durchmessern von < 150 µm auszufiltern. Derartige Probleme mit einem hohen Staubanteil im Calciumhypochlorit-Granulat ergeben sich insbesondere dann, wenn die Korngrößenverteilung des Calciumhypochlorit-Granulats einen Anteil von mehr als 0,5 % und insbesondere von mehr als 1 % an Partikeln mit einem Durchmesser von < 150 µm enthält. Derartig hohe Staubanteile im Calciumhypochlorit-Granulat können zwar ergänzend oder anstelle von Filtern mit anderen Abscheidemechanismen aus dem Calciumhypochlorit-Granulat entfernt werden, beispielsweise durch Zyklonabscheider. Die Integration solcher Abscheideeinrichtungen in Dosier- und Mischanlagen erhöht jedoch sowohl die Produktionskosten als auch die Betriebskosten der Dosier- und Mischanlage.

### AUFGABE DER ERFINDUNG

Vor diesem Hintergrund liegt der Erfindung die Aufgabe zugrunde, ein Verfahren sowie eine Dosieranlage zur Dosierung von Calciumhypochlorit in ein Wassersystem bereitzustellen, welche kostengünstig, umweltschonend und dauerhaft eine verbesserte Löslichkeit des Calciumhypochlorit-Feststoffs in einer wässrigen Lösung oder Suspension gewährleisten und die Ausbildung von Chlorschlamm reduzieren. Insbesondere bei der Verwendung von qualitativ niedrigeren Calciumhypochlorit-Kompositionen mit einem hohen Fremdstoff- und Staubanteil soll eine verbesserte Löslichkeit erzielt werden. Durch die Verbesserung der Löslichkeit des Calciumhypochlorit-Feststoffs in der wässrigen Lösung oder Suspension können Verstopfungen in einer Dosier- und Mischanlage, in der die wässrige Calciumhypochlorit-Lösung oder -Suspension angesetzt und mit der die chlorhaltige Lösung oder Suspension einem Wassersystem zugegeben wird, vermieden oder zumindest reduziert werden. Darüber hinaus soll die Arbeitssicherheit verbessert werden und es sollen möglichst wenig Betriebs- und Dosiermedien zum Einsatz kommen.

### KURZE BESCHREIBUNG DER ERFINDUNG UND BEVORZUGTE AUSFÜHRUNGSFORMEN

Diese Aufgabe wird mit dem Verfahren mit den Merkmalen des Anspruchs 1 sowie mit einer Dosieranlage mit den Merkmalen des Anspruchs 7 gelöst. Bevorzugte Ausführungsformen des Verfahrens und der Dosieranlage sind in den abhängigen Ansprüchen definiert.

In dem erfindungsgemäßen Verfahren wird zur Dosierung von Calciumhypochlorit in ein Wassersystem, wie z.B. in Schwimmbadwasser, zunächst eine wässrige Lösung oder Suspension durch Zugabe einer festen, Calciumhypochlorit enthaltenden Komposition in Prozesswasser erzeugt und die wässrige Lösung oder Suspension wird danach in das Wassersystem geleitet. Dabei wird das Prozesswasser vor der Zugabe der Komposition durch einen Behälter geleitet wird, in dem ein Granulat eines Mediums enthalten ist, welches in dem Prozesswasser eine katalytische Fällung von im Prozesswasser gelösten, härtebildenden Ionen durch Bildung von Impfkristallen, insbesondere von Calciumcarbonat- und/oder Magnesiumcarbonat-Kristallen, bewirkt. Das Medium wird daher nachfolgend auch als Impfkristall-Medium bezeichnet.

Anstelle eines Behälters, der mit dem Granulat des Mediums zumindest teilweise befüllt ist, kann auch eine mit dem Granulat des Mediums zumindest teilweise befüllte Durchflussarmatur vorgesehen sein, welche insbesondere in einem Wasserzulauf angeordnet ist, der zur Zuleitung des Prozesswassers in einen Mischbehälter, in dem die Calciumhypochlorit enthaltenden Komposition in dem Prozesswasser zur Calciumhypochlorit-Lösung oder -Suspension umgesetzt wird, dient. Wenn nachfolgend von dem zumindest teilweise mit dem Granulat des Mediums befüllten Behälter gesprochen wird, ist damit auch die Durchflussarmatur gemeint.

Durch die Bildung von Impfkristallen erfolgt in dem Prozesswasser beim Durchleiten durch den Behälter eine Ausfällung der im Prozesswasser enthaltenen Härtebildner, insbesondere von Calciumcarbonat- und/oder Magnesiumcarbonat. Wenn es sich bei dem durch den Behälter geleiteten Prozesswasser um Wasser aus dem Wassersystem handelt, das mit dem Verfahren mittels Zugabe von Calciumhypochlorit aufbereitet und desinfiziert werden soll, liegt in diesem Prozesswasser aufgrund einer bereits vorangegangen Desinfektion mit einer Calciumhypochlorit-Lösung oder -Suspension ein erheblicher Überschuss an Calcium-Ionen vor, weshalb in diesem Fall in erster Linie Calciumcarbonat in dem Prozesswasser ausfällt.

Es hat sich in überraschender Weise gezeigt, dass die Bildung von Impfkristallen durch eine katalytische Fällung von härtebildenden Ionen aus dem Prozesswasser, insbesondere zu Calciumcarbonat- und/oder Magnesiumcarbonat-Kristallen an der Oberfläche von Granulatpartikeln des Mediums, die sich nach Erreichen einer bestimmten Größe von den Granulatpartikeln des Mediums lösen und mit dem durch den Behälter strömenden Prozesswasser ausgetragen werden, die Löslichkeit der nachfolgend in das so vorbehandelte Prozesswasser zugegebenen Calciumhypochlorit-Komposition verbessert. Darüber hinaus werden die Eigenschaften des gebildeten Chlorschlamms insoweit verbessert, als die Verstopfungsneigung signifikant abnimmt. Insbesondere weist der sich bildende Chlorschlamm im Vergleich zu Dosierverfahren und -anlagen aus dem Stand der Technik eine weichere Konsistenz auf. Dadurch wird der durch Ausfällungen erzeugte Chlorschlamm hydromechanisch kontrollier- und ausspülbar und die Standzeit der Anlage kann signifikant verlängert werden.

Dadurch lassen sich Verstopfungen in einer Dosieranlage, in der die Calciumhypochlorit-Lösung oder -Suspension in einem Mischbehälter erzeugt und anschließend dem Wassersystem zugeführt wird, vermeiden oder zumindest reduzieren, wodurch Unterbrechungen in einem kontinuierlichen Dosiervorgang vermieden werden können. Die Verbesserung der Löslichkeit der festen Calciumhypochlorit-Komposition in dem Prozesswasser verbessert darüber hinaus die Effizienz der Desinfektion des Wassers, weil ein höherer Anteil des Chlors aus der Calciumhypochlorit-Komposition in der Lösung bzw. der Suspension als aktives Chlor zur Desinfektion zur Verfügung steht. Ferner wird eine höhere (Lager-)Stabilität der angesetzten Lösung oder Suspension mit dem Ergebnis einer Effizienzsteigerung und einer geringeren Chloratbildung erzielt.

Weiterhin kann die Bildung von Chlorschlamm, der sich insbesondere in dem Mischbehälter einer Dosieranlage am Behälterboden oder auch in anderen Komponenten der Dosieranlage absetzen kann, in dem erfindungsgemäßen Verfahren so beeinflusst werden, dass eine Umwandlung in eine andere, insbesondere eine weichere und leichter entfernbare bzw. leichter ausschwemmbare Kristall- oder Kalkmodifikation der Ausfällungen, wie z.B. zum Calcit und/oder Portlandit (Calcium-Hydroxid), erfolgt. Diese Umwandlung reduziert Verstopfungen, insbesondere in den Leitungen der Anlage, durch den gebildeten Chlorschlamm. Dadurch können die Intervalle von Reinigungsvorgängen, die zur Reinigung der Dosieranlage und insbesondere zur Entfernung von Chlorschlamm benötigt werden, verlängert werden. Speziell die Ausbildung von plattenförmigen Ablagerungen an den Wänden des Mischbehälters einer Dosieranlage, die dann während des Betriebs der Anlage abplatzen und zu Schäden sowie zu Verstopfungen in den Pumpen, Leitungen und Einbauteilen der Dosieranlage führen können, kann durch die Vorbehandlung des Prozesswassers in dem mit einem Granulat des Mediums befüllten Behälter zumindest weitestgehend vermieden werden. Dadurch kann die Lebensdauer der Dosieranlage und der Pumpen, die zur Förderung des Prozesswassers und der erzeugten Calciumhypochlorit-Lösung oder -Suspension eingesetzt werden, verlängert werden.

Durch das Ausfällen der im Prozesswasser enthaltenen Härtebildner, insbesondere von Calcium- und Carbonat-Ionen zu Calciumcarbonat-Kristallen, liegt das Calcium im vorbehandelten Prozesswasser in gebundener Form vor und führt daher offenbar und in überraschender Weise nicht zur Ausbildung von herkömmlichem Chlorschlamm. Die Ausfällungen von Chlorschlamm liegen bei der erfindungsgemäßen Vorbehandlung des Prozesswassers möglicherweise in einer anderen kristallinen Form als Kesselstein und insbesondere in einer weicheren Kristallisationsstruktur, speziell in einer Calcit-Form vor, die offenbar weniger zu Verstopfungen und zur Anhaftung an Wänden und in Rohrleitungen der Anlage neigt und leichter ausschwemmbar ist.

Medien, wie sie in dem erfindungsgemäßen Verfahren zur katalytischen Fällung der im Prozesswasser enthaltenen Härtebildner zum Einsatz kommen und hierfür in Granulatform in den Behälter, durch den das Prozesswasser vor der Zugabe der Calciumhypochlorit-Komposition geleitet wird, eingefüllt werden, sowie Verfahren zu deren Herstellung sind aus dem Stand der Technik bekannt, bspw. aus EP 0 957 066 B1 und EP 3 581 273 A1. Diese Medien werden zur Vermeidung von Kalkablagerungen in wasserführenden Systemen, Rohrleitungen und Heißwasserbereitern eingesetzt. Das dem Mechanismus der Impfkristallbildung zugrundeliegende Wirkprinzip wird in der Literatur auch mit den Begriffen "template assisted crystallization" (TAC) oder "nucleation assisted crystallization" (NAC) bezeichnet und erläutert, wie z.B. in WO 2023/205558 A1, EP 3 888 775 B1, EP 3 500 532 B1 und WO 2021/155110 A1.

Diese, auch als "TAC-Medien" bezeichnete Medien, die insbesondere in Granulatform mit kleinen Partikeln, insbesondere Kügelchen mit Durchmessern im Bereich von 100 µm bis 2 mm, vorliegen, erzeugen aufgrund einer katalytischen Wirkung des Mediums bei Kontakt mit Wasser, in dem härtebildende Ionen wie Calcium- und/oder Magnesium-Ionen sowie Carbonat- und/oder Hydrogencarbonat-Ionen gelöst sind, an der insbesondere porösen Oberfläche der Granulatpartikel Impfkristalle aufgrund einer katalytisch ausgelösten Rekombination der härtebildenden Ionen, bspw. zu Calciumcarbonat- und/oder Magnesiumcarbonat-Kristallen. Die an der Oberfläche der Granulatpartikel entstehenden Impfkristalle wachsen dabei bis zu einer bestimmten Größe weiter an und lösen sich dann von der Oberfläche der Granulatpartikel ab und haben anschließend die kristalline Form von bspw. Calcit bzw. Portlandit, mit der Eigenschaft, sich nicht als Kalkstein (Kesselstein) an Oberflächen anzulagern. Die gebildeten Impfkristalle können deshalb mit dem Wasserstrom, der durch das Granulat des Mediums geleitet wird, ausgeschwemmt werden.

Im erfindungsgemäßen Verfahren wird bei der Vorbehandlung des Prozesswassers in dem zumindest teilweise mit dem Granulat des Mediums befüllten Behälter aufgrund der Bildung der Impfkristalle insbesondere das im Prozesswasser enthaltene Calcium in den Calciumcarbonat-Impfkristallen gebunden und weitere, insbesondere im Überschuss im Prozesswasser enthaltene Calcium-Ionen können an den als Keimstelle für weiteres Kristallwachstum dienenden Impfkristallen in dem Prozesswasser in Form von Calciumcarbonat gebunden werden. Insbesondere können sich weitere Calciumcarbonat- und/oder Magnesiumcarbonat-Kristalle an den von der Oberfläche der Granulatpartikel des Mediums abgelösten Impfkristallen anlagern oder daran anwachsen. Diese Bindung der insbesondere in dem Prozesswasser im Überschuss vorhandenen Calcium-Ionen beeinflusst offenbar und in überraschender Weise die Bildung von Chlorschlamm und verbessert die Löslichkeit von Calciumhypochlorit in dem vorbehandelten Prozesswasser. Der gebildete Chlorschlamm liegt dabei nicht mehr in der gewöhnlichen Form, sondern in einer anderen Kristallisationsstruktur, möglicherweise in einer Calcit-Form oder einer anderen Kristallform oder Kristall-Modifikation vor, die offenbar weniger zu Anhaftungen an Oberflächen neigt, wodurch Verstopfungen in den Rohrleitungen der Dosier- und Mischanlage sowie die Bildung von plattenförmigen Ablagerungen vermieden werden können.

Die Impfkristalle, die sich im Behälter bilden, werden dabei mit dem Prozesswasser aus dem Behälter ausgeschwemmt und können dabei eine Depotwirkung in dem Prozesswasser entfalten, weil sie als Keimstelle für die weitere Anlagerung von härtebildenden Kristallen, insbesondere von Calciumcarbonat- und Magnesiumcarbonat-Kristallen dienen. Sie können die Härtebildner des Prozesswassers an sich binden und lösen dabei die Depotwirkung aus, indem sie anschließend wiederum die um ein Vielfaches höhere, durch die Calciumhypochlorit-Komposition eingebrachte, Menge an Calcium-Ionen binden und auf diese Weise die gesamte Menge an Härtebildnern (insbesondere die Calcium-Ionen), die im Prozesswasser enthalten ist, in Form von Kristallen binden. Die in Kristallen gebundenen Ionen stehen dann offenbar nicht mehr für die Bildung von Chlorschlamm in der herkömmlichen, schwer entfernbaren Form zur Verfügung, sondern es wird eine andere, weichere Form von Chlorschlamm (möglicherweise in einer Calcit-Form oder einer anderen Kristallmodifikation) gebildet, die nicht oder zumindest weniger zu Anhaftungen an Oberflächen führt und deshalb Verstopfungen vermeidet und leichter ausschwemmbar ist.

Im erfindungsgemäßen Verfahren wird das Prozesswasser bevorzugt in einem Wasserstrom mit einer vorgegebenen Durchflussrate durch den Behälter geleitet. Der Wasserstrom kann dabei kontinuierlich oder diskontinuierlich (d.h. batchweise) durch den Behälter geleitet werden. Dadurch wird ermöglicht, dass die sich durch die katalytische Fällung in dem Behälter bildenden Impfkristalle zunächst von den Granulatpartikeln des Mediums besser ablösen und danach mit dem Wasserstrom des durch den Behälter strömenden Prozesswassers ausgeschwemmt werden. Die mit dem Prozesswasser ausgeschwemmten Impfkristalle können dadurch die oben beschriebene Depotwirkung optimal entfalten, weil sie als Keimstelle für die weitere Anlagerung von Kristallen, insbesondere von Calciumcarbonat- und Magnesiumcarbonat-Kristallen in dem Prozesswasser, das durch den Behälter geleitet worden ist, zur Verfügung stehen. Auf diese Weise kann die gesamte Menge an Härtebildnern, insbesondere an Calcium-Ionen, die im Prozesswasser enthalten ist, in Form von Kristallen gebunden werden. Dies ist insbesondere dann, wenn es sich bei dem Prozesswasser um Wasser aus dem Wassersystem handelt, das einen hohen Überschuss an Calcium-Ionen im Vergleich zu anderen härtebildenden Kationen aufweist, von Vorteil, weil der durch die Calciumhypochlorit-Komposition eingebrachte, sehr hohe Überschuss an Calcium-Ionen mittels der vorher im Prozesswasser gebildeten Impfkristalle gebunden und der Ausfall als Kalkstein, der nicht entfernbar oder ausschwemmbar ist, verhindert bzw. zumindest verzögert wird.

Dabei ist der angereicherte Calciumgehalt des Prozesswassers sogar nützlich, da so die Zahl der gebildeten Impfkristalle und damit die Depotwirkung im Prozesswasser erhöht wird. Um diesen Effekt auch dann ausnutzen zu können, wenn es sich bei dem eingesetzten Prozesswasser um Weichwasser (bspw. weiches Wasser aus der öffentlichen Trinkwasserversorgung) handelt, wird das eingesetzte Prozesswasser zweckmäßig zunächst aufgehärtet, bevor es der Vorbehandlung in dem Behälter mit dem Impfkristall-Medium zugeführt wird.

Üblicherweise sind in den Dosieranlagen automatische oder manuell steuerbare Spüleinrichtungen für Dosierleitungen, Einbauteile sowie Impfstellen vorgesehen. Durch die Spülung mit Prozesswasser wird dabei neben der hydromechanischen Ausspülwirkung auch eine chemische Wirkung durch Einbringung weiterer Impfkristalle erzielt. Diese binden weitere, in den Leitungen befindliche Härtebildner, bzw. lösen bereits bestehende Ablagerungen chemisch wieder an und ab.

Bei einer Einmischung der Calciumhypochlorit-Lösung oder -Suspension in das Wasser des Wassersystems mittels eines Venturi-Verfahrens wird auch das dabei verwendete Treibwasser mit den Impfkristallen in Kontakt gebracht. Bei der Einmischung der Lösung oder Suspension in einen Bypass des Wassersystems, bspw. mittels einer Strahlpumpe und nachfolgender Verrohrung mit einer Venturidüse, steht deshalb eine weitere Depotwirkung zur Verfügung, wenn sich das Löslichkeitsprodukt ändert und es erneut zu Kalkausfällungen kommt.

Um eine möglichst gleichmäßige Verteilung der im Behälter gebildeten Impfkristalle sowie ein effizientes Austragen der Impfkristalle mit dem Wasserstrom des Prozesswassers zu ermöglichen, ist es vorteilhaft, wenn das Granulat des Mediums in dem Behälter durch das Einleiten des Prozesswassers fluidisiert wird. Dies kann bspw. dadurch erreicht werden, dass das vorgegebene Füllvolumen des Behälters nur teilweise mit dem Granulat des Mediums befüllt ist, bspw. in einem Bereich von 5 % bis 70 %, bevorzugt von 10 % bis 50 % und insbesondere zwischen 10 % und 30 % des Behältervolumens.

In einer bevorzugten Ausführungsform der Dosieranlage wird das Prozesswasser aus dem Wassersystem entnommen. Dies hat Vorteile in Bezug auf eine Erhöhung des Löslichkeitsprodukts durch einen niedrigen pH-Wert, der bereits durch das Wassersystem eingestellt ist und bei Schwimmbadwasser gern. DIN19643 zwischen 6,5 und 7,5 und bevorzugt im Bereich von 6,8 bis 7,2 liegt. Die daraus resultierenden Nachteile, wie eine Übersättigung des aus dem Wassersystem entnommenen Prozesswassers mit Calcium-Ionen (und ggf. auch mit Magnesium-Ionen) und die damit einhergehende Wasserhärte des Prozesswassers wird durch die erfindungsgemäße Vorbehandlung des Prozesswassers in dem Behälter zur Ausfällung der härtebildenden Calcium- und Magnesium-Ionen nicht nur ausgeglichen, sondern ist durch eine erhöhte Bildung von Impfkristallen und der daraus entstehenden Depotwirkung sogar zuträglich, um Verstopfungen und die Bildung von Chlorschlamm-Ablagerungen zu verhindern.

Alternativ zu dieser bevorzugten Verfahrensführung kann jedoch auch Trinkwasser, bspw. aus einem Trinkwasseranschluss, oder Brauchwasser, bspw. aus einem Brauchwasserreservoir, als Prozesswasser verwendet werden. Dabei wird das als Prozesswasser eingesetzte Wasser, v.a. in Weichwassergebieten, vor Durchleitung durch den Behälter mit dem Impfkristall-Medium zweckmäßig aufgehärtet, um eine hohe Menge an Impfkristallen zu erzeugen und um dadurch eine ausreichende Depotwirkung der Impfkristalle im Prozesswasser zu erzielen.

Bevorzugt wird die wässrige Lösung oder Suspension in einem Mischbehälter einer Dosier- und Mischanlage erzeugt, wobei dem Mischbehälter über einen Wasserzulauf das Prozesswasser und durch einen Kompositionszulauf die feste Calciumhypochlorit-Komposition zugeführt wird. Dabei wird über den Wasserzulauf ein Strom von Prozesswasser mit einer vorgegebenen Durchflussrate, welche bevorzugt im Bereich von 20 bis 55 Liter pro Minute liegt, in den Mischbehälter geleitet und über den Kompositionszulauf wird eine an die Durchflussrate bzw. das Volumen des Mischbehälters angepasste Menge der Komposition, welche bevorzugt zwischen 2 und 80 Gramm pro Liter Prozesswasser liegt, in das Prozesswasser geleitet. Dies ermöglicht eine optimale Dosierung durch eine materialsparende Anpassung der zugeführten Menge der Calciumhypochlorit-Komposition an die benötigte Dosierung und die pro Zeiteinheit benötigte Menge der wässrigen Calciumhypochlorit-Lösung bzw. -Suspension. Eine für die Desinfektion von Schwimmbadwasser benötigte Dosierung weist bspw. eine Dosis von 2 bis 80 Gramm der Calciumhypochlorit-Komposition pro Liter Prozesswasser auf.

Die erfindungsgemäße Dosieranlage, in der zweckmäßig das Verfahren zur Dosierung von Calciumhypochlorit in ein Wassersystem durchgeführt werden kann, umfasst einen Mischbehälter zur Herstellung einer wässrigen Calciumhypochlorit-Lösung oder - einer Calciumhypochlorit-Suspension durch Zugabe einer festen, Calciumhypochlorit enthaltenden Komposition in ein Prozesswasser, wobei der Mischbehälter einen Wasserzulauf zur Zuleitung des Prozesswassers und einen Kompositionszulauf zur Zugabe der Calciumhypochlorit-Komposition in das Prozesswasser aufweist. Zur Vorbehandlung des Prozesswassers insbesondere gemäß dem Verfahren, ist in dem Wasserzulauf ein Behälter angeordnet, in dem ein Granulat eines Mediums (Impfkristall-Medium) enthalten ist, wobei das Medium in dem durch den Wasserzulauf in den Behälter eingeleiteten Prozesswasser eine katalytische Fällung von im Prozesswasser gelösten, härtebildenden Ionen durch Bildung von Impfkristallen, insbesondere von Calciumcarbonat- und/oder Magnesiumcarbonat-Kristallen, bewirkt.

Anstelle eines Behälters, der mit dem Granulat des Mediums zumindest teilweise befüllt ist, kann auch eine mit dem Granulat des Mediums zumindest teilweise befüllte Durchflussarmatur vorgesehen sein, die in dem Wasserzulauf angeordnet ist.

In einer bevorzugten Ausführungsform der Dosieranlage weist der Behälter, der insbesondere als Druckbehälter ausgebildet ist, ein vorgegebenes Behältervolumen auf, welches bevorzugt im Bereich von 5 Liter bis 50 Liter liegt und besonders bevorzugt zwischen 10 Liter und 40 Liter beträgt. Um beim Einleiten des Prozesswassers in den Behälter eine Fluidisierung des Granulats des Mediums zu ermöglichen, ist nur ein Anteil des Behältervolumens von bspw. 5 % bis 70 %, bevorzugt von 10 % bis 50 % und insbesondere zwischen 10 % und 30 % des Behältervolumens mit dem Granulat des Mediums gefüllt. Dadurch wird eine vollständige Fluidisierung des Granulats des Mediums in dem Prozesswasser ermöglicht. Gleichzeitig wird durch den Wasserstrom des Prozesswassers, der mit einer vorgegebenen Durchflussrate durch den Behälter strömt, ein Ablösen der Impfkristalle von der Oberfläche der Granulatpartikel des Mediums gefördert und die abgelösten Impfkristalle werden mit dem Wasserstrom effizient aus dem Behälter ausgeschwemmt. Die Fluidiserung wird bei einem kleineren Füllanteil von bspw. 50 % des Behältervolumens oder weniger verbessert. Allerdings liegt bei sehr kleinen Füllanteilen von weniger als 10 % des Behältervolumens eine zu geringe Menge an Impfkristall-Medium in dem Behälter vor, um eine ausreichende Anzahl oder Konzentration an Impfkristallen im Prozesswasser zu erzeugen, die ausreichend ist, um den hohen Anteil an Calcium-Ionen im Prozesswasser in Kristalle zu binden.

Zweckmäßig wird das Prozesswasser durch einen mit dem Wasserzulauf verbundenen Eingang (Zulauf) in den Behälter geleitet und durch einen mit dem Mischbehälter verbundenen Ausgang (Ablauf) aus dem Behälter abgeführt, wobei das Prozesswasser den Behälter vorzugsweise entgegen der Schwerkraft von unten nach oben durchströmt. Dadurch wird eine Fluidisierung des Granulats des Mediums in dem Behältervolumen gefördert, wodurch sich eine homogene Durchmischung der gebildeten Impfkristalle über das Behältervolumen sowie ein effizienter Austrag der Impfkristalle, die sich von der Oberfläche der Granulatpartikel des Mediums gelöst haben, aus dem Behälter über den durchgeleiteten Wasserstrom des Prozesswassers gewährleistet.

Das Prozesswasser weist bevorzugt einen Mindestgehalt an Härtebildnern auf, um eine ausreichende Menge an Impfkristalle erzeugen zu können. Je mehr Härtebildner im Prozesswasser sind - eine ausreichende Menge an Granulat des Mediums im Behälter vorausgesetzt - desto mehr Impfkristalle können erzeugt werden und desto größer fällt die Depotwirkung aus. Das mit der Calciumhypochlorit-Lösung oder -Suspension bereits desinfizierte Wasser des Wassersystems eignet sich aufgrund des hohen Ca-Anteils (Anreicherung von Ca-Ionen über die Zugabe der Calciumhypochlorit-Komposition) daher in besonderem Maße. Dabei kann eine Optimierung durch gezielte Aufhärtung (d.h. einer Erhöhung der Gesamt-/ Carbonathärte des Prozesswassers) erfolgen, was insb. bei Nutzung von Trinkwasser aus der öffentlichen Trinkwasserversorgung in Weichwasserregionen der Fall ist.

Bei dem Medium (Impfkristall-Medium), das in Granulatform in den Behälter eingefüllt ist, handelt es sich bspw. um ein Polymer, insbesondere um Polyacrylat oder Polystyrol. Speziell ist das Medium ein granulares, modifiziertes Ionenaustauschermaterial, insbesondere ein schwachsaures Ionenaustauschermaterial, bei dem insbesondere eine Carboxylatgruppe des Ionenaustauschermaterials mit Kationen schwerlöslicher Salze, insbesondere mit Ca²⁺-Ionen und/oder Mg²⁺-Ionen, beladen ist. Das Ionenaustauschermaterial liegt dann in der Kationen-Form vor, bspw. in der Ca²⁺-Form. Durch diese Konditionierung des Ionenaustauschermaterials können aufgrund der elektrostatischen und stereochemischen Eigenschaften des modifizierten Ionenaustauschermaterials insbesondere Calcium- und Magnesium-Ionen sowie Carbonat-Ionen an der Oberfläche der Granulatpartikel zu Calcium- und/oder Magnesium-Carbonat aufgrund einer katalytischen Reaktion rekombinieren und dadurch Impfkristalle ausbilden.

Das Granulat des Mediums weist insbesondere Granulatkörner mit einer Korngrößenverteilung auf, bei der über 66 % der Granulatkörner einen Durchmesser zwischen 0,5 mm und 1,5 mm aufweisen und/oder bei der die mittlere Korngröße zwischen 0,5 mm und 1,5 mm liegt. Um die Granulatkörner in dem Behälter zurückzuhalten, ist daher bevorzugt und insbesondere stromabwärts des Behälters in dem Wasserzulauf und/oder an einem Ablauf des Behälters ein Partikel-Filter mit einer an die Größe der Granulatpartikel des Mediums angepassten Maschenweite angeordnet. Bevorzugt ist in dem Wasserzulauf, insbesondere stromabwärts des Behälters, und/oder an einem Ausgang des Behälters, ein Filtersieb als Partikel-Filter angeordnet, wobei das Filtersieb Partikel mit einem Durchmesser von mehr als 0,1 mm oder bevorzugt von mehr als 0,2 mm in dem Behälter zurückhält. Um den Partikel-Filter vor Druckstößen zu schützen, kann auf der Granulatschüttung des Mediums in der Kartusche noch ein Schwimmfilter angeordnet sein, bspw. eine Lage eines PP-Granulats, der gegenüber dem granulatförmigen Impfkristall-Medium ein geringeres spezifisches Gewicht (Dichte) aufweist und daher bei Beaufschlagung des Behälters mit Wasser auf der Granulatschüttung des Impfkristall-Mediums aufschwimmt. Durch den Schwimmfilter kann der Partikel-Filter vor Druckstößen geschützt werden und es wird verhindert, dass Granulatkörner des Impfkristall-Mediums in den Zulauf oder den Ablauf des Behälters gelangen und diesen verstopfen können. Der Schwimmfilter lockert dabei die Granulatschüttung des Impfkristall-Mediums auf, beugt Agglomeratbildung vor und unterstützt so zusätzlich den Fluidisierungsprozess in dem Behälter.

Um Wasser aus dem Wassersystem über den Behälter als Prozesswasser in den Mischbehälter der Dosieranlage leiten zu können, steht der Wasserzulauf bevorzugt mit dem Wassersystem in Verbindung. Dies ermöglicht es, Wasser aus dem Wassersystem zur Aufbereitung der Dosieranlage als Prozesswasser zuzuführen.

Zweckmäßig enthält die Dosieranlage eine Dosiereinrichtung mit einer Dosierleitung, über welche die im Mischbehälter erzeugte Lösung oder Suspension in das Wassersystem geleitet werden kann, um das darin enthaltene Wasser mit der chlorhaltigen Lösung oder Suspension zu desinfizieren. Die Dosiereinrichtung enthält zweckmäßig eine Dosierpumpe, mit der die Lösung oder Suspension aus dem Mischbehälter in die Dosierleitung gefördert wird.

Bevorzugt steht die Dosierleitung mit einer Sammeleinrichtung in Verbindung, wobei die Sammeleinrichtung insbesondere in oder an der Dosierleitung angeordnet sein kann. In der Sammeleinrichtung können sich Ausfällungen und nicht gelöste Feststoffpartikel der wässrigen Lösung oder Suspension, insbesondere durch Sedimentation und bevorzugt schwerkraftbedingt, absetzen. Die Sammeleinrichtung enthält hierfür bevorzugt einen Sammelbehälter mit einem vorgegebenen Sammelvolumen, in dem sich die Ausfällungen und nicht gelöste Feststoffpartikel der wässrigen Lösung oder Suspension ansammeln können. Dies ermöglicht es, Ausfällungen und nicht gelöste Feststoffpartikel aus der wässrigen Lösung oder Suspension weitestgehend unschädlich zu sammeln und gezielt zu entfernen.

Die Dosierleitung ist bevorzugt mit einer Spüleinrichtung gekoppelt oder zumindest koppelbar, um eine Spülflüssigkeit, insbesondere Wasser und bevorzugt Wasser aus dem Wassersystem, in bzw. durch die Sammeleinrichtung zu fördern. Dadurch kann die Sammeleinrichtung gespült werden und es können die insbesondere im Sammelbehälter angesammelten Ausfällungen und Feststoffpartikel aus der Sammeleinrichtung entfernt werden, so dass die Sammeleinrichtung wieder eine Aufnahmekapazität, insbesondere das vollständige Sammelvolumen, zur Sammlung von Ausfällungen und Feststoffpartikel aus der Lösung bzw. Suspension hat. Ein ausreichend hohes Sammelvolumen bspw. zwischen 0,01 dm³ und 0,10 dm³ vermeidet ein häufiges Entleeren der Sammeleinrichtung. Es können auch kleinere Sammelvolumen gewählt werden. Allerdings ist dann die Frequenz oder die Dauer von Entleerungsvorgängen, bspw. von Spülintervallen, in denen die Sammeleinrichtung mit einer Spülflüssigkeit ausgespült wird, zu erhöhen.

Bevorzugt wird dabei Wasser, welches vorher durch den mit dem Impfkristall-Medium gefüllten Behälter geleitet worden ist, als Spülflüssigkeit verwendet. Dies verstärkt den Reinigungseffekt, da die Impfkristalle in dem Behälter auch bestehende Ablagerungen anziehen oder lösen können und es werden Kalkausfällungen vermieden.

Die in der Sammeleinrichtung gesammelten Ausfällungen sowie andere Feststoffe, Partikel und ungelöste Suspensionsanteile können von Zeit zu Zeit auf einfache Weise aus der Sammeleinrichtung entfernt werden. Hierfür kann vorgesehen sein, dass die Sammeleirichtung eine verschließbare Öffnung aufweist, durch welche die gesammelten Ausfällungen, Feststoffe, Partikel und ungelösten Suspensionsanteile aus der Sammeleinrichtung entfernt werden können. Ergänzend oder alternativ dazu kann auch ein Ausspülen der gesammelten Ausfällungen, Feststoffe, Partikel und ungelösten Suspensionsanteile aus der Sammeleinrichtung erfolgen, bspw. durch Durchleiten einer Spülflüssigkeit durch die Sammeleinrichtung während vorgegebener Spülintervalle, in denen die in der Sammeleinrichtung gesammelten Ausfällungen, Feststoffe, Partikel und ungelösten Suspensionsanteile mit der Spülflüssigkeit aus der Sammeleinrichtung ausgespült werden.

In dem erfindungsgemäßen Verfahren und der Dosiervorrichtung gemäß der Erfindung wird folgender überraschender Effekt der Impfkristalle ausgenutzt: Bei der Zugabe einer Calciumhypochlorit-Komposition in das Prozesswasser erfolgt eine Bindung des durch die Zugabe der Calciumhypochlorit-Komposition erzeugten, massiven Ca²⁺-Überschusses an die bereits ausgebildeten Impfkristalle. Herstellungsbedingt werden beim Ansetzen einer Lösung oder Suspension durch Zugabe einer Calciumhypochlorit-Komposition in Wasser größere Mengen an Calcium-Ionen und sehr große Mengen an Calciumcarbonat (Kalk) in die wässrige Lösung bzw. Suspension eingebracht. Diese unvermeidlichen Beistoffe sind herstellungsbedingt durch den Produktionsprozess von Calciumhypochlorit vorhanden. Durch die erfindungsgemäße Vorbehandlung des Prozesswassers entsteht eine Depotwirkung, indem über die Bildung von Impfkristallen eine zusätzliche Kapazität im Prozesswasser (neben dem Aufnahmevermögen des Wassers im Rahmen des Löslichkeitsproduktes) geschaffen wird, die in der Lage ist, die über die dosierte Zugabe der Calciumhypochlorit-Komposition übermäßig eingebrachte Härte (insbesondere in Bezug auf Carbonat-Ionen und Calcium-Ionen, die eine um einen Faktor 5 - 50 höhere Konzentration gegenüber dem verwendeten Prozesswasser aufweisen) in Kristallen (insbesondere Calciumcarbonat-Kristalle) zu binden.

Dabei ist diese Bindungswirkung desto größer, je größer die Anzahl gebildeter Impfkristalle ist. Der Vorteil dieses Effekts macht sich daher speziell dann besonders stark bemerkbar, wenn als Prozesswasser Wasser aus dem Wassersystem eingesetzt wird, das bereits mit der Calciumhypochlorit-Lösung oder -Suspension desinfiziert worden ist, da dieses Wasser bereits einen Überschuss an Ca²⁺-Ionen aufweist. Ggf. kann die (Depot) Wirkung durch eine weitere Aufhärtung des Prozesswassers verstärkt werden. Dies ist insbesondere dann vorteilhaft, wenn als Prozesswasser (weiches) Trinkwasser aus der öffentlichen Trinkwasserversorgung eingesetzt wird.

Aufgrund der sehr hohen Menge an Calcium-Ionen im Prozesswasser können die Impfkristalle an den Granulatpartikeln des Mediums auf eine Größe anwachsen, so dass ein Niederschlag bzw. eine Ausfällung unvermeidlich ist. Die veränderte Kristallstruktur der Ausfällungen, die sich bei der Zugabe der Calciumhypochlorit-Komposition in das Prozesswasser ergeben, bewirkt, dass diese nicht mehr zum Anhaften und Anwachsen in Rohrleitungen und an Behälterwänden der Dosieranlage neigen, wodurch Verstopfungen in der Anlage und deren Komponenten vermieden werden können.

Der Effekt wird noch verbessert, wenn zusätzlich zu dem Einsatz der Impfkristalle weitere Maßnahmen durchgeführt werden, welche die Ausfällungen hydromechanisch beseitigen, wie z.B. eine Ausspülung der Ausfällungen oder nicht gelöster Partikel der Suspension mit einer Spülflüssigkeit, insbesondere Wasser aus dem Wassersystem. Dabei ist es vorteilhaft, wenn die Ausfällungen oder nicht gelösten Partikel der Suspension zunächst in einer Sammeleinrichtung gesammelt werden, z.B. schwerkraftbedingt durch Sedimentation. Dies ermöglicht es, die in der Sammeleinrichtung gesammelten Ausfällungen und Feststoffpartikel von Zeit zu Zeit aus der Sammeleinrichtung auszuspülen und dadurch dem Wassersystem zu entziehen. Während bei einer Dosierung der Calciumhypochlorit-Lösung oder -Suspension mittels einer Venturidüse bereits eine unmittelbare Einmischung der Lösung oder Suspension in Treibwasser des Wassersystems erfolgt, wird bei einer Dosierung über eine Dosiereinrichtung mit einer Dosierpumpe, wie z.B. einer Schlauchpumpe, ein Transport konzentriert über z.T. sehr lange Dosierleitungen mit kleinen Durchmessern bewirkt. In beiden Varianten erfolgt bevorzugt anlagenseitig automatisch oder manuell in Spülintervallen auch eine Spülung mit dem erfindungsgemäß vorbehandelten Prozesswasser, wodurch sich ein Zusatzeffekt einstellt, weil die im Prozesswasser vorhandenen Impfkristalle Ablagerungen verhindern.

Bei Verwendung einer Venturi-Düse wird das Treibwasser bevorzugt ebenfalls durch eine Durchleitung durch den mit dem Impfkristall-Medium gefüllten Behälter vorbehandelt. So wird ein Kalkausfall an der Einmischstelle durch den unvermeidlichen pH-Sprung des Treibwassers vermieden oder zumindest vermindert und dadurch freigesetztes Ca²⁺ wird an den im Treibwasser vorhandenen Impfkristallen gebunden.

Diese und weitere Vorteile sowie zweckmäßige und bevorzugte Merkmale der Erfindung ergeben sich aus den nachfolgend unter Bezugnahme auf die Zeichnungen beschriebenen Ausführungsbeispielen, welche jeweils lediglich beispielhaft bevorzugte Ausführungsformen der erfindungsgemäßen Dosieranlage und des erfindungsgemäßen Verfahren zur Dosierung von Calciumhypochlorit in ein Wassersystem zeigen.

### KURZE BESCHREIBUNG DER ZEICHNUNGEN

- **Fig. 1:**: Schematische Darstellung eines Systems zur Aufbereitung von Wasser aus einem Wassersystem mit einer Dosieranlage gemäß der Erfindung in einer ersten Ausführungsform;
- **Fig. 2:**: Schematische Darstellung eines Systems zur Aufbereitung von Wasser aus einem Wassersystem mit einer Dosieranlage gemäß der Erfindung in einer zweiten Ausführungsform;
- **Fig. 3**: Schnittdarstellung eines mit einem Granulat eines Mediums befüllten Behälters, der in den Dosieranlagen der Figuren 1 und 2 zum Einsatz kommt;
- **Fig. 4:**: Schematische Darstellung einer ersten Ausführungsform einer Dosiereinrichtung, die in einer Dosieranlage gemäß der Erfindung eingesetzt werden kann;
- **Fig. 5:**: Schematische Darstellung einer zweiten Ausführungsform einer Dosiereinrichtung, die in einer Dosieranlage gemäß der Erfindung eingesetzt werden kann;
- **Fig. 6:**: Schematische Darstellung einer dritten Ausführungsform einer Dosiereinrichtung, die in einer Dosieranlage gemäß der Erfindung eingesetzt werden kann;
- **Fig. 7:**: Schematische Darstellung einer vierten Ausführungsform einer Dosiereinrichtung, die in einer Dosieranlage gemäß der Erfindung eingesetzt werden kann;
- **Fig. 8:**: Photographische Darstellung eines Glasmesszylinders gefüllt mit einer Calciumhypochlorit-Suspension, bei der sich ein Bodensatz gebildet hat;

### DETAILLIERTE BESCHREIBUNG DER ERFINDUNG

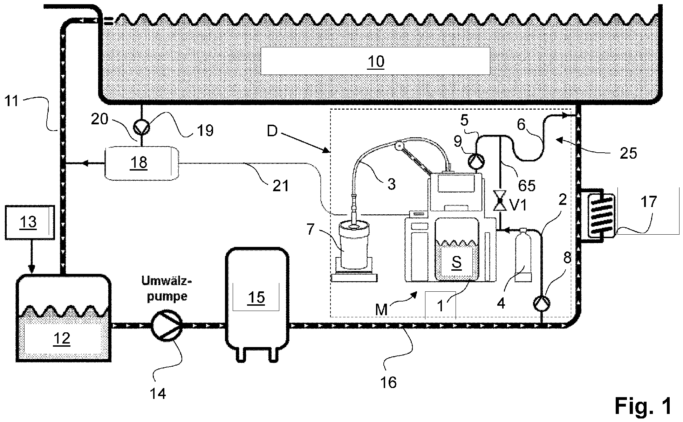

In Figur 1 ist ein System zur Aufbereitung von Wasser aus einem Wassersystem mit einer ersten Ausführungsform einer Dosieranlage zur Dosierung von Calciumhypochlorit in das Wassersystem gezeigt. Die Dosieranlage dient dabei zur Herstellung und Dosierung einer wässrigen Calciumhypochlorit-Lösung oder -Suspension und der Zuführung der Lösung oder Suspension in das Wassersystem. Bei dem Wassersystem kann es sich beispielweise, wie im Bespiel der Figur 1 gezeigt, um ein mit Badewasser befülltes Schwimmbecken 10 handeln. Das Schwimmbecken 10 ist dabei über eine Ablaufleitung 11 mit einem Rohwasserbehälter 12 verbunden. Der Rohwasserbehälter 12 weist einen Füllwasseranschluss 13 zum Einfüllen und Nachspeisen von Wasser, insbesondere von Brauch- oder Trinkwasser, auf. Der Füllwasseranschluss 13 kann beispielsweise mit einer Trinkwasserleitung verbunden sein. Zur Einleitung von Wasser aus dem Rohwasserbehälter 12 in das Schwimmbecken 10 ist eine Zulaufleitung 16 mit dem Rohwasserbehälter 12 und dem Schwimmbecken 10 verbunden. In der Zulaufleitung 16 ist eine Umwälzpumpe 14 zur Förderung des Wassers vom Rohwasserbehälter 12 in das Schwimmbecken 10 angeordnet. Weiterhin ist in der Zulaufleitung 16 ein Filtersystem 15 angeordnet, um das in das Schwimmbecken 10 eingeleitete Wasser zu filtern.

Zur Aufbereitung des Wassers aus dem Rohwasserbehälter 12 ist die in Figur 1 mit D bezeichnete Dosieranlage in den Wasserkreislauf integriert. Dabei wird Filtrat (d.h. Wasser, welches zwischen Filter und Desinfektionsimpfstelle entnommen worden ist) als Prozesswasser eingesetzt.

Die Dosieranlage D umfasst dabei eine Mischanlage M mit einem Mischbehälter 1, welcher über einen Wasserzulauf 2 mit der Zulaufleitung 16 in Verbindung steht, sowie eine Dosiereinrichtung 25 mit einer Zufuhrleitung 5 und Dosierleitung 6 zur Zuführung einer in der Mischanlage M erzeugten Calciumhypochlorit-Lösung oder -Suspension S in die Zulaufleitung 16. Zur Förderung der Calciumhypochlorit-Lösung oder -Suspension S in die Dosierleitung 6 und in die Zulaufleitung 16 umfasst die Dosiereinrichtung 25 mindestens eine Dosierpumpe 9 (bspw. eine oder mehrere Peristaltikpumpen), welche die Lösung oder Suspension aus dem Mischbehälter 1 ansaugt und über die Zufuhrleitung 5 in die Dosierleitung 6 fördert. Einzelheiten und weitere Merkmale der Dosier- und Mischanlage können der Patentschrift DE 10 2020 108 167 B4 entnommen werden, die diesbezüglich in Bezug genommen wird.

In dem Wasserzulauf 2 ist ein Ventil zum Öffnen und Schließen des Wasserzulaufs 2 vorgesehen. Weiterhin ist im Wasserzulauf 2 eine Treibwasserpumpe 8 angeordnet, mit der Prozesswasser aus der Zulaufleitung 16 in den Mischbehälter 1 der Mischanlage M gefördert werden kann.

Weiterhin ist in dem Wasserzulauf 2 ein Behälter 4 angeordnet, in dem ein Granulat eines Mediums enthalten ist, welches in dem durch den Wasserzulauf 2 in den Behälter 4 eingeleiteten Prozesswasser eine katalytische Fällung der im Prozesswasser gelösten, härtebildenden Ionen durch Bildung von Impfkristallen bewirkt.

Folgende kommerziell erhältliche Produkte können bspw. als Medium (Impfkristall-Medium) in Granulatform in dem Behälter 4 enthalten sein: Kalkschutz Maicat^{®} der Firma Woegerbauer, AquonPure^{®} der Firma AQON Water Solutions, das Produkt "Fluid Dynamics" der Fluid Dynamics International Ltd., BIOCAT^{®} KLS der Firma Watercryst, EagleSorb^{®} ES3 Anti-Scale, OneFlow^{®}, Next-ScaleStop^{™} oder Filtersorb^{®} SP3 der Firma WatchWater.

Der Mischbehälter 1 der Mischanlage M enthält weiterhin einen Kompositionszulauf 3 zur Zugabe einer Calciumhypochlorit enthaltenden Komposition. Die Calciumhypochlorit-Komposition ist dabei zweckmäßig pulver- oder granulatförmig und in einem Kompositionsbehälter 7 bevorratet. Bei dem Kompositionsbehälter 7 kann es sich beispielsweise um ein Gebinde eines darin enthaltenen Calciumhypochlorit-Granulats handeln.

Zur Erzeugung einer wässrigen Calciumhypochlorit-Lösung oder -Suspension wird über den Wasserzulauf 2 ein Wasserstrom des Prozesswassers mit einer bevorzugten Durchflussrate von bspw. 40 bis 55 Liter pro Minute durch den Behälter 4 in den Mischbehälter 1 geleitet. Gleichzeitig oder danach wird die Calciumhypochlorit-Komposition über eine Saugeinrichtung aus dem Kompositionsbehälter 7 angesaugt und über den Kompositionszulauf 3 in den Mischbehälter 1 geführt und in das darin befindliche Prozesswasser eingeleitet. Die Zugabe der Calciumhypochlorit-Komposition in das Prozesswasser erfolgt dabei in einer vorgegebenen Dosierung, bspw. in einer Dosis von 2 Gramm pro Liter bis 20 Gramm pro Liter Prozesswasser. In dem Mischbehälter 1 wird die Calciumhypochlorit-Komposition dem Prozesswasser zugegeben und zu einer wässrigen Calciumhypochlorit-Suspension umgesetzt und bevorzugt mittels eines Rührwerks in Lösung gebracht. In dem Mischbehälter 1 wird auf diese Weise eine Lösung oder Suspension von Calciumhypochlorit in Wasser in einer definierten Konzentration erzeugt.

Mit der Dosiereinrichtung 25 der Dosieranlage D kann die Calciumhypochlorit-Lösung oder -Suspension aus dem Mischbehälter 1 in die Zulaufleitung 16 dosiert werden. Hierfür kann die Lösung oder Suspension mit der Dosierpumpe 9 aus dem Mischbehälter 1 angesaugt und über die Zufuhrleitung 5 und die Dosierleitung 6 in die Zulaufleitung 16 überführt werden. Die Dosierleitung 6 mündet hierfür in einer Impfstelle mit einem Rückschlagventil in die Zulaufleitung 16. Bei Verwendung von Peristaltikpumpen als Dosierpumpe kann eine Abdosierung der Suspension auch direkt aus dem Mischbehälter 1 erfolgen.

In der Zulaufleitung 16 ist zur Erwärmung des Prozesswassers bevorzugt eine Heizeinrichtung vorgesehen, welche beispielsweise als Wärmetauscher 17 ausgebildet sein kann.

Im Schwimmbecken 10 ist zweckmäßig eine weitere Ablaufleitung 20 vorgesehen, welche mit einem Mess- und Regelsystem 18 verbunden ist. In der weiteren Ablaufleitung 20 ist eine Pumpe 19 zum Abpumpen von Wasser aus dem Schwimmbecken 10 in das Mess- und Regelsystem 18 vorgesehen. Das Mess- und Regelsystem 18 dient zur Analyse des Wassers aus dem Wassersystem (Schwimmbecken 10). Das Mess- und Regelsystem 18 ist dabei über eine Steuerleitung 21 mit einer Steuerung der Mischanlage M verbunden, um den aktuellen Stellgrad zur Ausregelung der Sollgröße (Chlorgehalt) an die Dosieranlage zu übertragen.

In der Dosieranlage D wird das Wasser aus dem Wassersystem (Schwimmbecken 10) zur Herstellung der Calciumhypochlorit-Lösung oder -Suspension verwendet. In der in Figur 1 gezeigten Ausführungsform wird also als Prozesswasser das Wasser aus dem Wassersystem (Schwimmbecken 10) eingesetzt und in der Dosieranlage D zur Herstellung einer Calciumhypochlorit-Lösung oder -Suspension verwendet. Das zur Herstellung der Calciumhypochlorit-Lösung oder -Suspension eingesetzte Prozesswasser wird dabei erfindungsgemäß vor Einleitung in den Mischbehälter 1 der Mischanlage M einer Vorbehandlung unterzogen, indem das Prozesswasser über den Wasserzulauf 2 durch den mit dem Granulat des Mediums befüllten Behälter 4 geleitet wird. Aufgrund einer katalytischen Fällung, die durch das granulatförmige Medium in dem Behälter 4 ausgelöst wird, werden die im Prozesswasser gelösten, härtebildenden Ionen durch Bildung von Impfkristallen, insbesondere in Form von Calciumcarbonat- und/oder Magnesiumcarbonat-Kristallen ausgefällt. Die an den Granulatpartikeln des Mediums gebildeten Impfkristalle lösen sich dabei nach einer bestimmten Zeit bzw. nach Erreichen einer bestimmten Größe der Impfkristalle von der Oberfläche der Granulatpartikel des Mediums ab und werden mit dem Wasserstrom des Prozesswassers, der über den Wasserzulauf 2 durch den Behälter 4 zum Mischbehälter 1 geführt wird, ausgeschwemmt.

Dort binden die im Prozesswasser gebildeten Impfkristalle die fertigungsbedingt über die Calciumhypochlorit-Komposition eingebrachte, und gegenüber dem Prozesswasser um ein Vielfaches (Faktor 5 bis 50) höhere Menge an Härtebildnern (vorwiegend Ca²⁺-Ionen), und überführen die Ausfällungen in eine nicht oder zumindest weniger anhaftende Kalkkristallform.

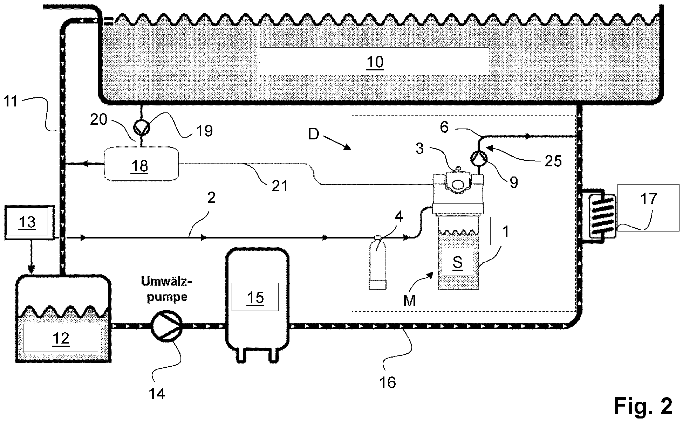

In Figur 2 ist ein System zur Aufbereitung von Wasser aus einem Wassersystem mit einer zweiten Ausführungsform einer Dosieranlage zur Dosierung von Calciumhypochlorit in das Wassersystem gezeigt.

In der zweiten Ausführungsform der erfindungsgemäßen Dosieranlage wird - anders als in der ersten Ausführungsform von Figur 1 - anstelle von Wasser aus dem Wassersystem (Schwimmbecken 10) Trink- oder Brauchwasser aus dem Füllwasseranschluss 13 zur Herstellung einer Calciumhypochlorit-Lösung oder -Suspension eingesetzt. Bis auf diesen Unterschied und einer anderen Dosierung der Calciumhypochlorit-Lösung oder -Suspension stimmt die in Figur 2 gezeigte Ausführungsform mit der Ausführungsform von Figur 1 überein. In Figur 2 sind daher für sich entsprechende Komponenten des Systems dieselben Bezugszeichen wie in Figur 1 verwendet. Soweit Komponenten der Dosieranlage von Figur 1 in Figur 2 nicht explizit dargestellt sind, sind diese in der Dosieranlage nicht sichtbar integriert. Der Kompositionszulauf 3 der Mischanlage M wird in der Ausführungsform von Figur 2 manuell mit einer Saugstation oder mit einem Messbecher mit der Calciumhypochlorit-Komposition befüllt.

In der Ausführungsform von Figur 2 wird als Prozesswasser für die Herstellung der Calciumhypochlorit-Lösung oder -Suspension Trink- oder Brauchwasser aus dem Füllwasseranschluss 13 verwendet. Hierfür steht der Füllwasseranschluss 13 über einen Systemtrenner BA mit dem Wasserzulauf 2 in Verbindung, über den das Prozesswasser, bspw. Trinkwasser aus der öffentlichen Trinkwasserversorgung, der Mischanlage M und insbesondere dem Mischbehälter 1 zugeführt wird, bevorzugt mit einer Durchflussrate von 20 bis 45 Liter pro Minute. Wie in der Ausführungsform von Figur 1 ist auch in der Ausführungsform von Figur 2 in dem Wasserzulauf 2 ein Behälter 4 angeordnet, der zumindest teilweise mit einem Granulat eines Mediums gefüllt ist, welches in dem durch den Wasserzulauf 2 in den Behälter 4 eingeleiteten Prozesswasser eine katalytische Fällung der härtebildenden Ionen durch Bildung von Impfkristallen bewirkt. Das durch die katalytische Fällung der härtebildenden Ionen in dem Behälter 4 aufbereitete Prozesswasser wird - wie in der Ausführungsform von Figur 1 - in den Mischbehälter 1 eingeleitet und über einen Befülldosierer mit einem Kompositionszulauf 3 wird eine pulver- oder granulatförmige Calciumhypochlorit-Komposition manuell über eine Saugstation oder mit einem Messbecher zur Bildung einer Calciumhypochlorit-Lösung oder -Suspension in den Mischbehälter 1 geleitet. Im Mischbehälter wird die Calciumhypochlorit-Komposition mittels eines Turbulators hydromechanisch in Lösung gebracht, wodurch eine Calciumhypochlorit-Lösung oder -Suspension, bspw. in einer Konzentration von 10 bis 80 Gramm Calciumhypochlorit pro Liter Prozesswasser, erzeugt wird. Die im Mischbehälter 1 erzeugte Lösung oder Suspension wird, wie in der Ausführungsform von Figur 1, mittels einer Dosiereinrichtung 25 mit einer Dosierleitung 6 und einer Dosierpumpe 9 (insbesondere eine oder mehrere Peristaltikpumpen) in die Zulaufleitung 16 gefördert.

Da in dem Beispiel von Figur 2 als Prozesswasser Trink- oder Brauchwasser zur Herstellung der Calciumhypochlorit-Lösung oder -Suspension eingesetzt wird, liegt darin ggf. je nach Qualität des Trink- oder Brauchwassers keine ausreichende Wasserhärte vor. Es ist es daher vorteilhaft, wenn das Prozesswasser vor Einleitung in den Behälter 4 durch eine Aufhärtung vorkonditioniert wird, um insbesondere einen Überschuss an Calcium-Ionen zu erzeugen. Die Aufhärtung kann bspw. durch Zugabe von Calciumcarbonat erfolgen.

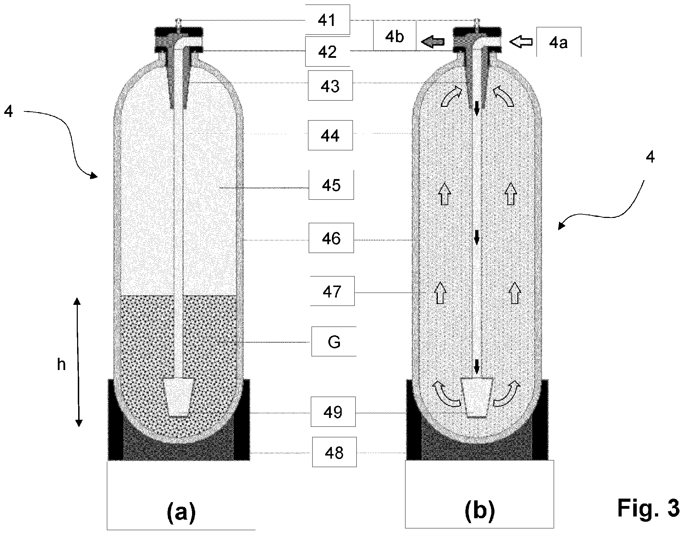

In Figur 3 ist der Behälter 4 der Dosieranlage D in einer Schnittdarstellung im Detail gezeigt. Der Behälter 4 umfasst einen Druckbehälter 46, der beispielsweise in Form einer Patrone oder Kartusche ausgebildet und austauschbar in einem Standfuß 48 angeordnet ist. An einer Oberseite des Behälters 4 ist in einer Öffnung des Druckbehälters 46 ein Anschluss- und Ventilkopf 42 eingesetzt. Der Anschluss- und Ventilkopf 42 umfasst ein Entlüftungsventil 41 sowie einen Eingang 4a (Zulauf) und einen Ausgang 4b (Ablauf), ein mit dem Eingang 4a verbundenes Fallrohr 44 und einen sich im Bereich des Anschluss- und Ventilkopfs 42 um das Fallrohr 44 erstreckenden Ringkanal 43, der mit dem Ausgang 4b in Verbindung steht. Zum Anschluss des Behälters 4 in dem Wasserzulauf 2 der Dosieranlagen D der Figuren 1 und 2 wird der Anschluss- und Ventilkopf 2 so in den Wasserzulauf 2 angeschlossen, dass das Prozesswasser zur Herstellung der Calciumhypochlorit-Lösung oder -Suspension durch den Eingang 4a (Zulauf) in den Behälter 4 einströmt und durch den Ausgang 4b (Ablauf) aus dem Behälter 4 zum Mischbehälter 1 der Mischeinrichtung M ausströmt.

Am unteren Ende des Fallrohrs 44, das sich im Wesentlichen über die gesamte Höhe des Behältervolumens 45 erstreckt, ist ein Zulauffilter 49 angeordnet, der knapp oberhalb des Bodens des Behälters 4 liegt. In den Behälter 4 ist ein Granulat G des Impfkristall-Mediums in einer vorgegebenen Füllhöhe h eingefüllt. Die Füllhöhe h des Mediengranulats G ist dabei bevorzugt so gewählt, dass zwischen 10 % und 70 %, besonders bevorzugt zwischen 10 % und 30 % des gesamten Füllvolumens des Behälters 4 (Behältervolumen 45) mit dem granulatförmigen Medium (Impfkristall-Medium) befüllt ist.

In Figur 3a ist der Behälter 4 mit dem darin eingefüllten Granulat G des Mediums in einem nicht von Wasser durchströmten Zustand gezeigt, wobei die Füllhöhe h dargestellt ist.

Das dem Behälter 4 über den Eingang 4a zur Vorbehandlung zugeführte Prozesswasser strömt durch den Eingang 4a in die Fallleitung 44 und am unteren Ende der Fallleitung 44 aus dem Zulauffilter 49 in die Granulatschüttung G des Impfkristall-Mediums. In Figur 3b ist der Behälter 4 mit dem darin eingefüllten Granulat G des Mediums in einem von Wasser durchströmten Zustand gezeigt. Durch diesen Zulauf von Prozesswasser wird das Granulat G des Mediums in dem Behältervolumen des Behälters 4 fluidisiert, wie in Figur 3b gezeigt. Durch den Wasserdruck, mit dem das Prozesswasser durch den Eingang 4a des Behälters 4 gepumpt wird, strömt das Prozesswasser entgegen der Schwerkraft in dem Behälter 4 nach oben, wie durch die Pfeile 47 in Figur 3b angedeutet. Das nach oben strömende Prozesswasser strömt durch den Ringkanal 43 des Anschluss- und Ventilkopfs 2 zum Ausgang 4b des Behälters 4. In dem Ringkanal 43 ist zweckmäßig ein Filtersieb angeordnet, dessen Maschenweite so ausgebildet ist, dass die Granulatpartikel des Mediums in dem Behältervolumen 45 des Behälters 4 zurückgehalten werden. Das durch den Ringkanal 43 zum Ausgang 4b (Ablauf) des Behälters 4 strömende Prozesswasser wird schließlich über den am Ausgang 4b angeschlossenen Wasserzulauf 2 in den Mischbehälter 1 geleitet.

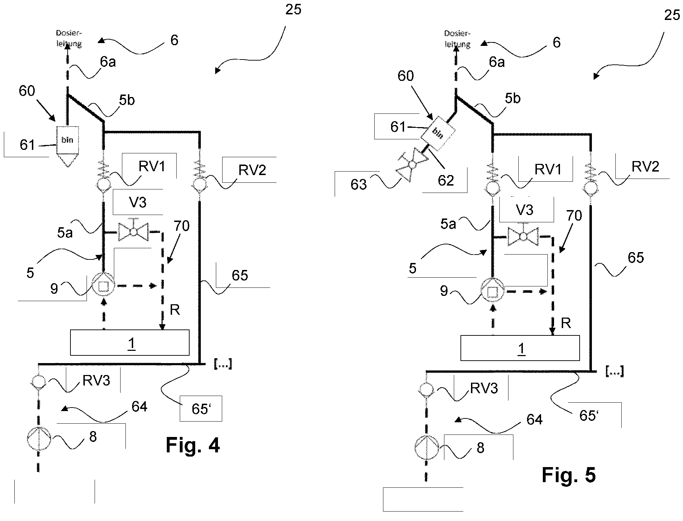

In den Figuren 4 bis 7 sind verschiedene Ausführungsformen einer Dosiereinrichtung 25 gezeigt, die jeweils in einer erfindungsgemäßen Dosieranlage D verwendet werden können und bis auf die Ausbildung einer Sammeleinrichtung 60 übereinstimmen. Deshalb werden zunächst die übereinstimmenden Merkmale der verschiedenen Ausführungsformen der Dosiereinrichtungen 25 der Figuren 4 bis 7 erläutert und danach wird die Ausbildung der jeweiligen Sammeleinrichtung 60 für jede Ausführungsform gesondert beschrieben.

Die Dosiereinrichtungen 25 dienen zur Dosierung der Calciumhypochlorit- Lösung oder -Suspension in das Wassersystem und umfassen hierfür eine Dosierpumpe 9 und eine Dosierleitung 6, über die die wässrige Calciumhypochlorit-Lösung oder -Suspension dem Wassersystem zugeführt werden kann. Die Dosierpumpe 9 saugt dabei die Calciumhypochlorit-Lösung oder -Suspension aus einem Mischbehälter 1, in dem die Lösung oder Suspension angesetzt worden ist, oder aus einem mit einer fertigen Calciumhypochlorit-Lösung oder -Suspension gefüllten Vorratsbehälter an und pumpt die Lösung oder Suspension über die Zufuhrleitung 5, die mit der Dosierleitung 6 in Verbindung steht, in die Dosierleitung 6. Die Dosierleitung 6 weist dabei einen vertikalen ersten Leitungsabschnitt 6a auf, der zumindest im Wesentlichen vertikal orientiert ist, wobei die Lösung oder Suspension entgegen der Schwerkraft in dem vertikalen ersten Leitungsabschnitt 6a in Pfeilrichtung vertikal von unten nach oben gefördert wird. Die Dosierleitung 6 kann noch weitere Leitungsabschnitte umfassen, die hier nicht dargestellt sind. Insbesondere kann die Dosierleitung 6 weitere Leitungsabschnitte, die sich in stromabwärtiger Richtung (also in Förderrichtung der Dosierpumpe) an den ersten Leitungsabschnitt 6a anschließen, umfassen.

In der Zufuhrleitung 5 ist eine Sicherungseinrichtung 70 mit einem zum Mischbehälter 1 oder dem Vorratsbehälter führenden Rücklauf R und einem Druckentlastungsventil V3 vorgesehen, über die bei einem Schlauchbruch oder einem Leck in der Dosierleitung 6 oder der Zufuhrleitung 5 die Lösung oder Suspension zurück in den Mischbehälter 1 oder in den Vorratsbehälter geleitet wird.

Wie aus den Figuren 4 bis 7 ersichtlich, enthält die Zufuhrleitung 5 einen vertikal verlaufenden Leitungsabschnitt 5a und einen sich daran anschließenden Mündungsabschnitt 5b, der in den ersten Leitungsabschnitt 6a der Dosierleitung 6 mündet. Der Mündungsabschnitt 5b mündet dabei unter einem Winkel, der im gezeigten Ausführungsbeispiel ca. 45° beträgt und bevorzugt im Bereich zwischen 10° und 90°, besonders bevorzugt im Bereich von 20° bis 90° und insbesondere zwischen 30° und 60° liegt, in den vertikalen ersten Leitungsabschnitt 6a der Dosierleitung 6.

In der Zufuhrleitung 5 ist ein erstes Rückschlagventil RV1 angeordnet. Bevorzugt befindet sich das erstes Rückschlagventil RV1 im vertikalen Leitungsabschnitt 5a der Zufuhrleitung 5.

Die Dosiereinrichtungen 25 der Figuren 4 bis 7 umfassen eine Spülleitung 65, die oberhalb des Rückschlagventils RV1 in die Zufuhrleitung 5 mündet. In der Spülleitung 65 ist ein zweites Rückschlagventil RV2 angeordnet. Die Spülleitung 65 kann an eine Spüleinrichtung 64 angeschlossen werden, welche eine Pumpe 8 zur Förderung einer Spülflüssigkeit in eine zentrale Spülleitung 65' umfasst. Zur Kopplung der Dosiereinrichtung 25 mit der Spüleinrichtung 64 kann die Spülleitung 65 der Dosiereinrichtung 25 mit der zentralen Spülleitung 65' der Spüleinrichtung 64 verbunden werden. In der zentralen Spülleitung 65' ist dabei ein weiteres Rückschlagventil RV3 angeordnet, das verhindert, dass die Spülflüssigkeit zurück zur Pumpe 8 strömen kann. An die zentrale Spülleitung 65' können weitere Spülleitungen 65 von weiteren Dosiereinrichtungen angeschlossen werden (wie in den Figuren 4 bis 7 mit dem Symbol [...] angedeutet), um mehrere Dosiereinrichtungen mit der Spülflüssigkeit versorgen zu können.

In den Ausführungsformen der Figuren 4 bis 7 ist unterhalb des vertikalen ersten Leitungsabschnitts 6a der Dosierleitung 6 eine Sammeleinrichtung 60 angeordnet und fluidisch mit dem unteren Ende des ersten Leitungsabschnitts 6a verbunden.

In der Ausführungsform der Figur 4 umfasst die Sammeleinrichtung 60 einen abnehmbaren Sammelbehälter 61 mit einem inneren Sammelvolumen, das über eine obere Öffnung im Sammelbehälter mit dem unteren Ende des ersten Leitungsabschnitts 6a verbunden ist.

Der Sammelbehälter 61 weist ein inneres Sammelvolumen von bevorzugt 0,01 dm³ bis 0,10 dm³ auf. Das Sammelvolumen dient zum Sammeln von Feststoffen, wie Ausfällungen, Partikel oder ungelöste Bestandteile der Lösung oder Suspension, die in dem vertikalen ersten Leitungsabschnitt 6a schwerkraftbedingt nach unten sedimentieren. Zum Entfernen der im Sammelbehälter 61 gesammelten Feststoffe kann der Sammelbehälter manuell aus der Dosiereinrichtung 25 herausgenommen und die gesammelten Feststoffe können durch die obere Öffnung aus dem Sammelvolumen des Sammelbehälters entnommen werden. Dabei kann der Sammelbehälter 61 auch mit einer Flüssigkeit, die bspw. mittels eines Schlauchs eingesprüht wird, ausgespült werden.

In der Ausführungsform der Figur 5 umfasst die Sammeleinrichtung 60 einen Sammelbehälter 61, der über eine obere Öffnung mit dem unteren Ende des ersten Leitungsabschnitts 6a verbunden ist und zusätzlich eine untere Öffnung 62 aufweist, welche von einem Ventil 63 oder einem abnehmbaren Deckel verschlossen ist. Durch ein Öffnen des Ventils 63 oder durch Abnehmen des Deckels kann die untere Öffnung des Sammelbehälters freigegeben werden, so dass die darin gesammelten Feststoffe aus dem Sammelbehälter 61 herausgenommen werden können. Dies kann zweckmäßig auch automatisch erfolgen, indem bspw. das Ventil 63 von Zeit zu Zeit und insbesondere nach einer vorgegebenen Betriebsdauer der Dosiereinrichtung 25 von einer elektronischen Steuereinrichtung geöffnet wird. Zum Abführen der dabei herauslaufenden Lösung oder Suspension, welche die in dem Sammelbehälter 61 gesammelten Feststoffe enthält, ist an das Ventil 63 vorteilhaft eine Abfuhrleitung angeschlossen, die in einen Abwasserkanal mündet. Gleichzeitig kann die Ausspülung durch ein Starten der Spüleinrichtung unterstützt werden.

Wie in der Ausführungsform der Figur 4 weist der Sammelbehälter 61 ein inneres Sammelvolumen auf, welches im Vergleich zur Ausführungsform der Figur 4 wegen der Möglichkeit der automatischen Entleerung über das Ventil 63 etwas kleiner sein kann und bspw. bevorzugt 0,005 dm³ bis 0,050 dm³ umfasst.

Insbesondere in der Ausführungsform der Figur 5 können die im Sammelvolumen des Sammelbehälters 61 gesammelten Feststoffe, insbesondere in zeitlich festgelegten Spülintervallen, mittels der an die Dosiereinrichtung 25 gekoppelten Spüleinrichtung 64 aus dem Sammelbehälter 61 ausgespült werden. Hierfür fördert die Spüleinrichtung 64 eine Spülflüssigkeit, bei der es sich insbesondere um Wasser und bevorzugt um Wasser aus dem Wassersystem handeln kann, über die Spülleitungen 65' und 65 und die Zufuhrleitung 5 in den ersten Leitungsabschnitt 6a der Dosierleitung 6 und von dort bei geöffnetem Ventil 63 oder bei abgenommenem Deckel durch das Sammelvolumen der Sammeleinrichtung 61. Dabei wird der erste Leitungsabschnitt 6a der Dosierleitung zweckmäßig mit einem hier nicht dargestellten Absperrelement verschlossen, so dass die Spülflüssigkeit in und durch den Sammelbehälter 61 strömen kann.

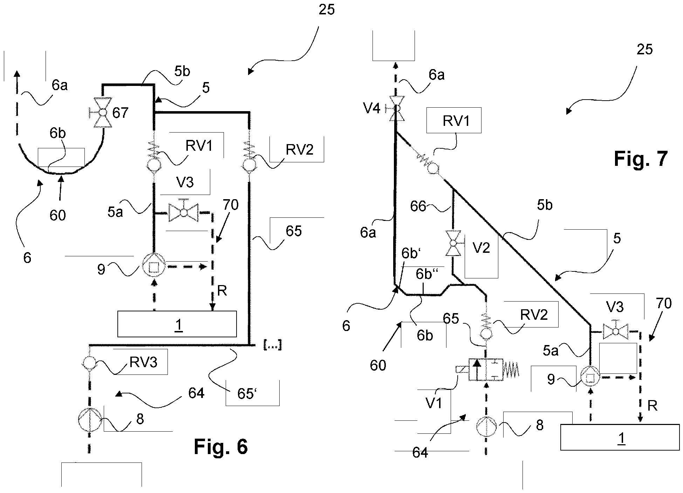

In der Ausführungsform der Figur 6 umfasst die Sammeleinrichtung 60 einen zweiten Leitungsabschnitt 6b, der mit dem ersten Leitungsabschnitt 6a der Dosierleitung 6 direkt verbunden ist und zumindest abschnittsweise nicht vertikal verläuft. In dem in Figur 6 gezeigten Beispiel ist der zweite Leitungsabschnitt 6b gebogen ausgebildet und enthält insbesondere eine halbkreisförmige Schlaufe. Durch die Biegung weist der zweite Leitungsabschnitt 6b zumindest abschnittsweise Bereiche auf, die nicht vertikal verlaufen. Der gebogene zweite Leitungsabschnitt 6b ist an einem Ende mit dem unteren Ende des vertikalen ersten Leitungsabschnitt 6a und am anderen Ende mit einem Mündungsabschnitt 5b der Zufuhrleitung 5 verbunden, wobei der Mündungsabschnitt 5b in dem in Figur 6 gezeigten Beispiel horizontal verläuft. Der schlaufenförmig gebogene zweite Leitungsabschnitt 6b bildet dabei ein Sammelvolumen der Sammeleinrichtung 60 aus, in dem die Feststoffe, die aus dem vertikalen ersten Leitungsabschnitt 6a nach unten sedimentieren, gesammelt werden können. In dem zweiten Leitungsabschnitt 6b, insbesondere am Übergang zum Mündungsabschnitt 5b der Zufuhrleitung, ist zweckmäßig ein Absperrelement 67 angeordnet, mit dem der zweite Leitungsabschnitt 6b verschlossen werden kann. Das Absperrelement 67 dient dazu, ein Leerlaufen der Dosierleitung bei einer Wartung der Rückschlagventile RV1 und RV2 zu verhindern. Zudem kann auch bei einer Fehlfunktion der Rückschlagventile RV1 und RV2 an einer Impfstelle und dem Rückschlagventil RV beim Wechsel des Pumpenschlauches reagiert werden, um zu verhindern, dass die Lösung oder Suspension zurückläuft.

In der Ausführungsform der Figur 6 bildet das Innenvolumen des zweiten Leitungsabschnitts 6b das Sammelvolumen der Sammeleinrichtung. Bevorzugt weist der zweite Leitungsabschnitt 6b eine Länge im Bereich von 50 cm bis 250 cm und einen Innendurchmesser von 4 mm bis 12 mm auf. Der Innendurchmesser des zweiten Leitungsabschnitts 6b kann dabei dem Innendurchmesser des ersten Leitungsabschnitts 6a und/oder dem Innendurchmesser der Zufuhrleitung 5 entsprechen. Der zweite Leitungsabschnitt 6b kann direkt und unterbrechungsfrei an seinem stromabwärtigen Ende in den ersten Leitungsabschnitts 6a übergehen.Wie in der Ausführungsform der Figur 5 kann auch in der Ausführungsform der Figur 6 die Sammeleinrichtung 60 in Form des zweiten Leitungsabschnitts 6b mittels der an die Dosiereinrichtung 25 gekoppelten Spüleinrichtung 64 gespült werden. Hierzu wird eine bei geöffnetem Absperrelement 67 eine Spülflüssigkeit über die Spülleitungen 65, 65' und die Zufuhrleitung 5 in den sich daran stromabwärts anschließenden zweiten Leitungsabschnitt 6b gefördert. Die zweckmäßig unter Druck stehende Spülflüssigkeit spült dabei die im Innenvolumen des zweiten Leitungsabschnitts 6b gesammelten Feststoffe in den sich stromabwärts anschließenden ersten Leitungsabschnitt 6a der Dosierleitung und von dort in das Wassersystem.

In der Ausführungsform der Figur 7 umfasst die Dosiereinrichtung eine Dosierleitung 6 mit einem vertikalen ersten Leitungsabschnitt 6a und einen mit dem ersten Leitungsabschnitt 6a verbunden zweiten Leitungsabschnitt 6b, sowie eine Dosierpumpe 9, die über eine Zufuhrleitung 5 mit der Dosierleitung verbunden ist. Die Zufuhrleitung 5 enthält dabei einen vertikal stehenden Abschnitt 5a und einen Mündungsabschnitt 5b, der schräg zum vertikalen ersten Leitungsabschnitt 6a, insbesondere unter einem Winkel zwischen 30° und 60° und speziell wie in Figur 7 gezeigt unter einem Winkel von 45°, verläuft. Der schräg verlaufende Mündungsabschnitt 5b der Zufuhrleitung 5 mündet in den vertikalen ersten Leitungsabschnitt 6a der Dosierleitung. In der der Zufuhrleitung 5 und speziell im Mündungsabschnitt 5b der Zufuhrleitung 5 ist dabei ein erstes Rückschlagventil RV1 angeordnet, welches die Dosierpumpe 9 vor Verschmutzungen schützt und einen Überdruck verhindert. Wie in den Ausführungsformen der Figuren 4 bis 6 ist in der Zufuhrleitung 5 eine Sicherungseinrichtung 70 mit einem zum Mischbehälter 1 oder dem Vorratsbehälter führenden Rücklauf Rund einem Druckentlastungsventil V3 vorgesehen.

In der Ausführungsform der Figur 7 ist im ersten Leitungsabschnitt 6a der Dosierleitung 6 ein weiteres Ventil V4 angeordnet, mit dem die Dosierleitung 6 abgesperrt und/oder der Durchfluss durch die Dosierleitung 6 eingestellt werden kann. Ein solches Ventil V4 kann zweckmäßig auch in den Ausführungsformen der Figuren 4 und 5 in der Dosierleitung 6 vorgesehen sein.

In der Ausführungsform der Figur 7 ist ein zweiter Leitungsabschnitt 6b mit dem unteren Ende des ersten Leitungsabschnitts 6a der Dosierleitung 6 direkt verbunden, wobei der zweite Leitungsabschnitt 6b zumindest abschnittsweise nicht vertikal verläuft. Der zweite Leitungsabschnitt 6b bildet dabei eine Sammeleinrichtung 60 zum Sammeln von Feststoffen, die sich schwerkraftbedingt in dem ersten Leitungsabschnitt 6b nach unten absetzen. In dem in Figur 7 gezeigten Beispiel weist der zweite Leitungsabschnitt 6b einen direkt mit dem unteren Ende des ersten Leitungsabschnitts 6a verbundenen Verbindungsbereich 6b' und einen sich daran anschließenden horizontalen Bereich 6b" auf, wobei der Verbindungsbereich 6b' mit dem vertikalen ersten Leitungsabschnitt 6a einen Winkel von ca. 45° einschließt und der horizontalen Bereich 6b" horizontal verläuft und damit senkrecht zum ersten Leitungsabschnitt 6a steht. Das Innenvolumen des zweiten Leitungsabschnitts 6b bildet dabei ein Sammelvolumen der Sammeleinrichtung 60 zum Sammeln der sedimentierten Feststoffe aus.

An den zweiten Leitungsabschnitts 6b schließt sich in der Ausführungsform der Figur 7 eine Spülleitung 65 an, in der ein zweites Rückschlagventil RV2 und ein Spülventil V1 angeordnet sind. Mit dem Spülventil V1, das bevorzugt als elektronisch schaltbares Ventil V1 ausgebildet ist, kann die Spülleitung 65 geöffnet und geschlossen werden. Zum automatischen Öffnen der Spülleitung 65 während eines Spülintervalls kann das Ventil V1 zweckmäßig von einer elektronischen Steuereinrichtung angesteuert werden. Die Spülleitung 65 ist mit einer Spüleinrichtung 64 verbunden, mit der eine Spülflüssigkeit mittels einer Pumpe 8 in die Spülleitung 65 gepumpt werden kann. Bei geöffnetem Spülventil V1 strömt die Spülflüssigkeit während eines Spülintervalls von der Spülleitung 65 in den ersten Leitungsabschnitt 6b und von dort in den ersten Leitungsabschnitt 6a, wobei die in dem zweiten Leitungsabschnitt 6b gesammelten Feststoffe ausgespült werden.

Die Spülleitung 65 ist mit dem Mündungsabschnitt 5b der Zufuhrleitung 5 in der Ausführungsform der Figur 7 über eine Bypass-Leitung 66 verbunden, in der ein Bypass-Ventil V2 angeordnet ist, mit dem die Bypass-Leitung 66 geöffnet und geschlossen werden kann. Zweckmäßig kann der Durchfluss einer Spülflüssigkeit durch die Bypass-Leitung 66 mittels des Ventils V2 eingestellt werden. Bei geöffnetem Spülventil V1 und geöffnetem Bypass-Ventil V2 kann eine Spülflüssigkeit von der Spülleitung 65 über die Bypass-Leitung 66 in die Zufuhrleitung 5 strömen, um diese und das darin angeordnete Rückschlagventil RV1 zu spülen.

Wie in der Ausführungsform der Figur 6 kann auch in der Ausführungsform der Figur 7 die Sammeleinrichtung 60 in Form des zweiten Leitungsabschnitts 6b mittels der an die Dosiereinrichtung 25 gekoppelten Spüleinrichtung 64 gespült werden. Hierzu wird bei geöffnetem Spülventil V1 eine Spülflüssigkeit über die Spülleitung 65 in den sich daran stromabwärts anschließenden zweiten Leitungsabschnitt 6b gefördert. Die zweckmäßig unter Druck stehende Spülflüssigkeit spült dabei die im Innenvolumen des zweiten Leitungsabschnitts 6b gesammelten Feststoffe in den sich stromabwärts anschließenden ersten Leitungsabschnitt 6a der Dosierleitung und von dort in das Wassersystem. Bei geöffnetem Bypass-Ventil V2 kann die Spülflüssigkeit über die Bypass-Leitung 66 auch in die Zufuhrleitung 5 strömen. In einem Teilstrom (Justierung über den Öffnungsgrad des Ventils V2) kann die Spülflüssigkeit durch das Rückschlagventil RV1 in den ersten Leitungsabschnitt 6a der Dosierleitung 6 strömen, um diesen zu spülen. Dabei ist die Zufuhrleitung 5 durch die Pumpe (Rotordruck am Pumpenschlauch) geschlossen und das Ventil V2 bewirkt eine Druckminderung und somit einen Schutz der Pumpe und des daran angeschlossenen Pumpenschlauchs.

### BEISPIELE

Zur Verdeutlichung der Wirkungen, die durch die Erfindung erzielt werden, wurden wässrige Calciumhypochlorit-Lösungen mit unterschiedlichen Konzentrationen aus verschiedenen Calciumhypochlorit-Kompositionen (in fester Form) angesetzt und es wurde der Einfluss der erfindungsgemäßen Behandlung der erzeugten Lösungen auf die Löslichkeit der festen Calciumhypochlorit-Kompositionen in Wasser untersucht. Hierfür wurde Leitungswasser, welches als Lösemittel zur Erzeugung der wässrigen Calciumhypochlorit-Lösungen verwendet wurde, erfindungsgemäß vor der Zugabe der festen Calciumhypochlorit-Komposition durch einen Behälter geleitet, in dem ein Granulat eines Mediums (Impfkristall-Medium) eingefüllt ist, wobei das Medium in dem Wasser eine katalytische Fällung von gelösten härtebildenden Ionen durch Bildung von Impfkristallen bewirkt. Zum Vergleich wurden wässrige Calciumhypochlorit-Lösungen mit denselben Konzentrationen aus denselben Calciumhypochlorit-Kompositionen mit unbehandeltem Leitungswasser angesetzt und es wurde die Löslichkeit der Calciumhypochlorit-Kompositionen dieser Lösungen mit der Löslichkeit der Calciumhypochlorit-Kompositionen verglichen, in denen das als Lösemittel eingesetzte Wasser erfindungsgemäß mit dem Impfkristall-Medium vorbehandelt wurde.

### BEISPIELE DER ERFINDUNG

Zur Herstellung von Lösungen bzw. Suspensionen von Calciumhypochlorit (CHC) in Wasser gemäß der Erfindung wurden wässrige Lösungen mit CHC-Konzentrationen von 2 %, 4 % und 8 % aus verschiedenen Calciumhypochlorit-Kompositionen (in fester Form) angesetzt. Die Konzentrationen verstehen sich dabei als Gewichtsanteile (w/w) in dem Sinne, dass bspw. bei einer Konzentration von 2 % in 98 g Wasser eine Menge von 2 g CHC zugegeben wird.

Dabei wurden als feste Calciumhypochlorit-Kompositionen die Produkte "Doscal G" und "Niclon 7000" verwendet. Bei dem Produkt "Doscal G" handelt es sich um eine Calciumhypochlorit-Komposition in Granulatform, welches von der chinesischen Herstellerfirma Sinopec stammt und von der Firma Witty in Europa vertrieben wird. Das Produkt "Niclon 7000" ist eine Calciumhypochlorit-Komposition in Pelletform mit einer einheitlichen Partikelgröße und stammt von dem japanischen Hersteller TOSOH. Der Chloranteil ist dabei jeweils gleich und liegt typischerweise bei ca. 77,6 %.

Bei dem Wasser, das als Lösemittel zur Herstellung der erfindungsgemäßen Lösungen bzw. Suspensionen verwendet worden ist, handelt es sich um Leitungswasser , das einer Vorbehandlung gemäß der Erfindung unterzogen worden ist, bevor die feste Calciumhypochlorit -Komposition zugegeben wurde. Zur Vorbehandlung wurde das Leitungswasser durch eine Kartusche mit einem Aufbau wie in Figur 3 gezeigt mit einem Netto-Innenvolumen von 19,4 Liter geleitet, die mit 5 Liter eines granulatförmigen Mediums befüllt war. Bei dem granulatförmigen Medium handelte es sich um das Produkt "MAICAT^{®}" der Firma Woegerbauer (www.maicat-kalkschutz.de). Dabei handelt es sich um ein makroporöses Granulat zur Erzeugung von Impfkristallen auf der Basis eines vernetzten Polyacrylats als Matrix mit einer Beschichtung aus einer kristallinen Modifikation des Calciumcarbonats als eine funktionelle Gruppe. Auf der Granulatschüttung des Mediums "MAICAT^{®}" wurde in der Kartusche noch eine Lage von 1 Liter PP-Granulat (100-GA09) als Schwimmfilter aufgelegt, um den im Ablauf der Kartusche angeordneten Partikel-Filter vor Druckstößen zu schützen.

Nach der Vorbehandlung des Wassers wurden mit dem vorbehandelten Wasser als Lösemittel durch Vermischung mit einer entsprechenden Menge von granulat- bzw. pelletförmigen CHC-Kompositionen wässrige CHC-Lösungen mit einer CHC-Konzentration von 2 %, 4 % und 8 % hergestellt. Hierfür wurde eine entsprechende Menge der CHC-Komposition in ein Becherglas eingegeben und das Becherglas mit einer der gewünschten Konzentration entsprechenden Menge des vorbehandelten Wassers aufgefüllt.

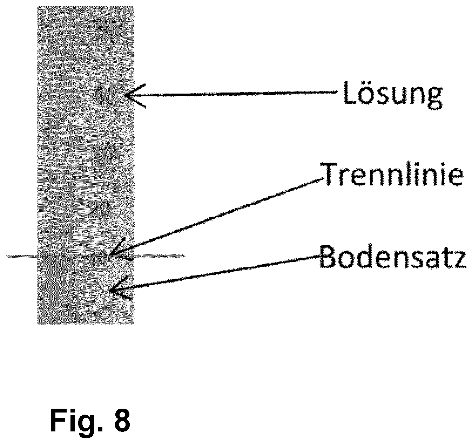

Die CHC-Komposition wurde anschließend durch Verrühren vollständig in dem Becherglas suspendiert. Die hierfür erforderliche Lösezeit wurde mit einer Stoppuhr erfasst (Lösezeit). Zur Prüfung wurde das Becherglas vom Rührer genommen und in einer Sichtprüfung auf absetzenden Feststoffanteil bodenseitig von unten sehend kontrolliert. Falls noch ursprünglicher CHC-Feststoffanteil vorhanden war, wurde weitergerührt und nach kurzer Zeit erneut geprüft. Nach vollständiger einheitlicher Suspension der Schwebstoffe wurden jeweils ungefähr 100 mL der Suspensionen sofort in einen 100-mL-Glasmesszylinder überführt. Ab diesem Zeitpunkt wurde die Zeit (Messzeit) gemessen. Nach einer Messzeit von 20 Minuten, 40 Minuten und 60 Minuten wurde jeweils die Löslichkeit des CHC in den hergestellten Lösungen/Suspensionen erfasst. Hierzu wurde der Bodensatz erfasst, der sich nach Ablauf der jeweiligen Messzeit im Glasmesszylinder durch Sedimentation der nicht gelösten Bestandteile des CHC bzw. der sich gebildeten Ausfällungen am Boden des Glasmesszylinders gebildet hat. Zur Erfassung des Bodensatzes wurde die Höhe der Trennlinie des sich absetzenden Bodensatzes in dem Glasmesszylinder nach der jeweiligen Messzeit (20, 40 bzw. 60 Minuten) abgelesen. In Figur 8 ist ein Beispiel eines mit einer CHC-Suspension befüllten Glasmesszylinders nach einer bestimmten Zeit, in der sich durch Sedimentation ein Bodensatz gebildet hat, photographisch gezeigt, um die optische Erfassung der Trennline des Bodensatzes von der sich darüber befindlichen Lösung zu zeigen.

Gemäß obiger Beschreibung wurden jeweils für jede Konzentration je zwei Versuche durchgeführt, die jeweils in den Tabellen 1 bis 3 mit Versuch A und Versuch B bezeichnet sind. Für die Auswertung der Ergebnisse wurde jeweils der Mittelwert der Messwerte ermittelt. Die Ergebnisse dieser Bestimmung der Löslichkeit der CHC-Komposition in der erzeugten Suspension sind in den Tabellen 1 bis 3 als Volumen (in ml) des erfassten Bodensatzes im Glasmesszylinder aufgeführt. Je größer das Volumen des Bodensatzes desto schlechter hat sich die feste CHC-Komposition im Wasser gelöst. Dabei sind die Messungen an den erfindungsgemäßen Beispielen mit "gem. Erfindung" bezeichnet.

### VERGLEICHSBEISPIELE

Zur Darstellung der Wirkungen der Erfindung und des Einflusses der erfindungsgemäßen Vorbehandlung des Wassers mit einem Medium, welches in dem Wasser eine katalytische Fällung von gelösten, härtebildenden Ionen durch Bildung von Impfkristallen bewirkt, wurden Vergleichsbeispiele analog zu den o.g beschriebenen Beispielen der Erfindung erzeugt, wobei der einzige Unterschied in den Vergleichsbeispielen darin besteht, dass anstelle des mit dem Medium vorbehandelten Leitungswassers dasselbe Leitungswasser ohne eine Vorbehandlung als Lösemittel zur Herstellung der Suspensionen verwendet wurde.

Die Ergebnisse der Erfassung der Löslichkeit der CHC-Komposition in den Vergleichsbeispielen sind in den Tabellen 1 bis 3 mit "LW" (für Leitungswasser) bezeichnet (ebenfalls jeweils in zwei Versuchen ermittelt, Versuch A und Versuch B, wobei für die Auswertung der Ergebnisse jeweils der Mittelwert aus Versuch A und Versuch B ermittelt wurde).

### AUSWERTUNG DER BEISPIELE UND DER VERGLEICHSBESIPIELE

Um den Einfluss der erfindungsgemäßen Behandlung des als Lösemittel verwendeten Wassers auf die Löslichkeit der festen Calciumhypochlorit-Kompositionen in den erzeugten Suspensionen darzustellen, wurde für die unterschiedlichen Konzentrationen des CHC in der Suspension (2 %, 4 % und 8 %) jeweils die Differenz des Volumens des Bodensatzes zwischen den Vergleichsbeispielen und den Beispielen der Erfindung, (gesondert für jede Messzeit: 20 Minuten, 40 Minuten und 60 Minuten), gebildet und in Tabelle 4 (Auswertung: "Differenz Bodensatz") aufgeführt. Aus Tabelle 4 ist ersichtlich, dass sich für jede Messzeit und für jede Konzentration des CHC bei den Vergleichsbeispielen ein signifikant größerer Bodensatz als bei den Beispielen gern, der Erfindung ergibt. Daraus ist ersichtlich, dass die erfindungsgemäße Vorbehandlung des Wassers in dem Medium zu einer verbesserten Löslichkeit der CHC-Komposition in dem vorbehandelten Wasser und zu einem geringeren Anteil an ungelösten Bestandteilen und Ausfällungen, die sich als Bodensatz in Form von Schlamm sedimentieren, führt.

**Tabelle 1**

| Versuch A | | | | | |
|---|---|---|---|---|---|
| CHC-Konzentration: 8% | | NICLON 7000 | | DOSCAL G | |
| | | gem. Erfindung | LW | gem. Erfindung | LW |
| Lösezeit /min: | | 01:51 | 01:53 | 09:01 | 12:58 |
| Bodensatz nach 20 min [ml] | | 13 | 19,5 | ~34 | ~42 |
| 40 min [ml] | | 9,5 | 14 | 15,5 | 18 |
| 60 min [ml] | | 8 | 12,5 | 13 | 15 |
| | | | | | |

| Versuch B | | | | | |
|---|---|---|---|---|---|
| CHC-Konzentration: 8% | NICLON 7000 | | | DOSCAL G | |
| | gem. Erfindung | | LW | gem. Erfindung | LW |
| Lösezeit /min: | 01:50 | | 01:54 | 10:04 | 09:00 |
| Bodensatz nach 20 min [ml] | 14 | | 19 | 0 | ~40 |
| 40 min [ml] | 10,5 | | 13 | 12,5 | 18 |
| 60 min [ml] | 9 | | 11 | 10,5 | 15 |

**Tabelle 2**

| Versuch A | | | | |
|---|---|---|---|---|
| CHC-Konzentration: 4 % | NICLON 7000 | | DOSCAL G | |
| | gem. Erfindung | LW | gem. Erfindung | LW |
| Lösezeit /min: | 01:30 | 01:27 | 07:49 | 06:28 |
| Bodensatz nach 20 min [ml] | 5,5 | 10 | 7 | 11 |
| 40 min [ml] | 4 | 7,5 | 5,5 | 9 |
| 60 min [ml] | 4 | 6 | 5 | 8 |
| | | | | |

| Versuch B | | | | |
|---|---|---|---|---|
| CHC-Konzentration: 4 % | NICLON 7000 | | DOSCAL G | |
| | gem. Erfindung | LW | gem. Erfindung | LW |
| Lösezeit /min: | 01:39 | 01:32 | 06:05 | 06:28 |
| Bodensatz nach 20 min [ml] | 6 | 10 | 7 | 11 |
| 40 min [ml] | 4 | 8 | 6 | 9 |
| 60 min [ml] | 4 | 7 | 5 | 8 |

**Tabelle 3**

| Versuch A | | | | |
|---|---|---|---|---|
| CHC-Konzentration: 2% | NICLON 7000 | | DOSCAL G | |
| | gem. Erfindung | LW | gem. Erfindung | LW |
| ösezeit /min: | 01:10 | 01:14 | 03:50 | 04:41 |
| 20 min [ml] | 3,5 | 5 | 5,5 | 9 |
| 40 min [ml] | 3 | 4,5 | 5 | 8 |
| 60 min [ml] | 3 | 4 | 5 | 7 |
| | | | | |

| Versuch B | | | | |
|---|---|---|---|---|
| CHC-Konzentration: 2 % | NICLON 7000 | | DOSCAL G | |
| | gem. Erfindung | LW | gem. Erfindung | LW |
| Lösezeit /min: | 01:20 | 01:22 | 03:57 | 04:54 |
| Bodensatz nach 20 min [ml] | 3 | 5 | 5,5 | 8 |
| 40 min [ml] | 3 | 4 | 5 | 7 |
| 60 min [ml] | 2,5 | 4 | 4 | 7 |

**Tabelle 4**

| | NICLON 7000 | | | DOSCAL G | | |
|---|---|---|---|---|---|---|
| CHC-Konzentration [Gew.%] | 8% | 4% | 2% | 8% | 4% | 2% |
| Lösezeit-Differenz [min] | 2 s bis 4 s | (-)7 s bis (-) 3 s | 2 s bis 4s | (-)1 min 4 s bis 3 min 57 s | (-) 1min 21 s bis 23 s | 51 s bis 57 s |
| Differenz Bodensatz nach 20 min [ml] | 5,75 | 4,25 | 1,75 | 8 | 4 | 3 |
| Differenz Bodensatz nach 40 min [ml] | 3,5 | 3,75 | 1,25 | 4 | 3,25 | 2,5 |
| Differenz Bodensatz nach 60 min [ml] | 3,25 | 2,5 | 1,25 | 3,25 | 3 | 2,5 |
| | Standardabweichung +/- **0,5 ml** | | | Standardabweichung +/- **0,75 ml** | | |

## Patentansprüche

1. Verfahren zur Dosierung von Calciumhypochlorit in ein Wassersystem, insbesondere in Schwimmbadwasser, umfassend die Herstellung einer wässrigen Lösung oder Suspension durch Zugabe einer festen, Calciumhypochlorit enthaltenden Komposition in Prozesswasser sowie ein Einleiten der wässrigen Lösung oder Suspension in das Wassersystem, **dadurch gekennzeichnet, dass** das Prozesswasser vor der Zugabe der Komposition durch einen Behälter (4) oder eine Durchflussarmatur geleitet wird, wobei in dem Behälter oder der Durchflussarmatur ein Granulat eines Mediums enthalten ist, welches in dem Prozesswasser eine katalytische Fällung von im Prozesswasser gelösten, härtebildenden Ionen durch Bildung von Impfkristallen, insbesondere von Calciumcarbonat- und/oder Magnesiumcarbonat-Kristallen, bewirkt.

2. Verfahren nach Anspruch 1, wobei sich aufgrund einer katalytischen Wirkung des Mediums Calcium- und/oder Magnesium-Ionen sowie Carbonat- und/oder Hydrogencarbonat-Ionen unter Bildung von Calciumcarbonat- und/oder Magnesiumcarbonat-Kristallen an der Oberfläche von Partikeln des Mediums anlagern und als Keimstelle für eine weitere Fällung von im Prozesswasser insbesondere im Überschuss gelösten Calcium-, Magnesium-, Carbonat und Hydrogencarbonat-Ionen wirken, indem sich Calciumcarbonat- und/oder Magnesiumcarbonat-Kristalle an den Impfkristallen anlagern oder daran anwachsen.

3. Verfahren nach Anspruch 1 oder 2, **dadurch gekennzeichnet, dass** das Prozesswasser in einem Wasserstrom mit einer vorgegebenen Durchflussrate, welche insbesondere im Bereich von 20 Liter pro Minute bis 55 Liter pro Minute liegt, durch den Behälter (4) oder die Durchflussarmatur geleitet wird, wobei die in dem Behälter oder der Durchflussarmatur gebildeten Impfkristalle mit dem Wasserstrom aus dem Behälter (4) oder der Durchflussarmatur geleitet werden.

4. Verfahren nach einem der voranstehenden Ansprüche, wobei das Granulat des Mediums in dem Behälter (4) durch das Einleiten des Prozesswassers fluidisiert wird.

5. Verfahren nach einem der voranstehenden Ansprüche, wobei die Zugabe der Komposition in das Prozesswasser in einer vorgegebenen Dosierung, bevorzugt in einer Dosierung von 2 Gramm pro Liter bis 80 Gramm pro Liter Prozesswasser erfolgt.

6. Verfahren nach einem der voranstehenden Ansprüche, wobei die Herstellung der wässrigen Lösung oder Suspension in einem Mischbehälter (1) erfolgt, dem durch einen Wasserzulauf (2) das Prozesswasser und durch einen Kompositionszulauf (3) die feste Komposition zugeführt wird, wobei über den Wasserzulauf (2) ein Strom von Prozesswasser mit einer vorgegebenen Durchflussrate, welche bevorzugt im Bereich von 20 Liter pro Minute bis 55 Liter pro Minute liegt, in den Mischbehälter geleitet und über den Kompositionszulauf (3) eine an die Durchflussrate angepasste Menge der Komposition, welche bevorzugt zwischen 2 und 80 Gramm pro Liter Prozesswasser liegt, in das Prozesswasser geleitet wird, wobei das Prozesswasser bevorzugt aus dem Wassersystem entnommen wird.

7. Dosieranlage zur Dosierung von Calciumhypochlorit in ein Wassersystem, umfassend einen Mischbehälter (1) zur Herstellung einer wässrigen Lösung oder Suspension durch Zugabe einer festen, Calciumhypochlorit enthaltenden Komposition in ein Prozesswasser, wobei der Mischbehälter (1) einen Wasserzulauf (2) zur Zuleitung des Prozesswassers und einen Kompositionszulauf (3) zur Zugabe der Komposition in das Prozesswasser aufweist, **dadurch gekennzeichnet, dass** in dem Wasserzulauf (2) ein Behälter (4) oder eine Durchflussarmatur angeordnet ist, wobei in dem Behälter (4) oder der Durchflussarmatur ein Granulat eines Mediums enthalten ist, das in dem durch den Wasserzulauf (2) in den Behälter (4) oder der Durchflussarmatur eingeleiteten Prozesswasser eine katalytische Fällung von im Prozesswasser gelösten, härtebildenden Ionen durch Bildung von Impfkristallen, insbesondere von Calciumcarbonat- und/oder Magnesiumcarbonat-Kristallen, bewirkt.

8. Dosieranlage nach Anspruch 7, **dadurch gekennzeichnet, dass** der Behälter (4) ein vorgegebenes Behältervolumen aufweist, welches bevorzugt im Bereich von 5 Liter bis 50 Liter liegt und besonders bevorzugt zwischen 10 Liter und 40 Liter beträgt, wobei ein Anteil des Behältervolumens von 5 % bis 70 %, bevorzugt von 10 % bis 50 % und insbesondere zwischen 10 % und 30 % des Behältervolumens mit dem Granulat des Mediums gefüllt ist.

9. Dosieranlage nach Anspruch 7 oder 8, **dadurch gekennzeichnet, dass** das Prozesswasser durch einen mit dem Wasserzulauf (2) verbundenen Eingang (4a) in den Behälter (4) oder die Durchflussarmatur geleitet und durch einen mit dem Mischbehälter (1) verbundenen Ausgang (4b) aus dem Behälter (4) oder der Durchflussarmatur abgeführt wird, wobei das Prozesswasser den Behälter (4) oder die Durchflussarmatur vorzugsweise zumindest teilweise entgegen der Schwerkraft von unten nach oben durchströmt.

10. Dosieranlage nach einem der Ansprüche 7 bis 9, **dadurch gekennzeichnet, dass** es sich bei dem Medium um ein Polymer, insbesondere Polyacrylat oder Polystyrol, oder um ein modifiziertes Ionenaustauschermaterial, insbesondere ein schwachsaures Ionenaustauschermaterial, handelt, wobei bei dem modifizierten Ionenaustauschermaterial insbesondere eine Carboxylatgruppe des Ionenaustauschermaterials mit Kationen schwerlöslicher Salze, insbesondere mit Ca²⁺- Ionen und/oder Mg²⁺- Ionen, beladen ist.

11. Dosieranlage nach einem der Ansprüche 7 bis 10, **dadurch gekennzeichnet, dass** das Granulat des Mediums Granulatkörner mit einer Korngrößenverteilung aufweist, bei der über 66 % der Granulatkörner einen Durchmesser zwischen 0,5 mm und 1,5 mm aufweisen, und/oder bei der die mittlere Korngröße, gemessen in einem Siebdurchgang, zwischen 0,5 mm und 1,5 mm liegt.

12. Dosieranlage nach einem der Ansprüche 7 bis 11, **dadurch gekennzeichnet, dass** in dem Wasserzulauf (2), insbesondere stromabwärts des Behälters (4) oder der Durchflussarmatur, und/oder an einem Ausgang (4b) des Behälters (4) oder der Durchflussarmatur ein Filter angeordnet ist, der die Granulatkörner in dem Behälter (4) zurückhält, wobei der Filter bevorzugt ein Filtersieb enthält, welches Partikel mit einem Durchmesser von mehr als 0,1 mm oder besonders bevorzugt von mehr als 0,2 mm in dem Behälter (4) oder der Durchflussarmatur zurückhält.

13. Dosieranlage nach einem der Ansprüche 7 bis 12, **dadurch gekennzeichnet, dass** der Wasserzulauf (2) mit dem Wassersystem in Verbindung steht, um Wasser aus dem Wassersystem über den Behälter (4) oder die Durchflussarmatur in den Mischbehälter (1) der Dosieranlage zu leiten und/oder dass die Dosieranlage eine Dosiereinrichtung (5) mit einer Dosierpumpe (9) und einer Dosierleitung (6) umfasst, wobei die im Mischbehälter (1) erzeugte Lösung oder Suspension mittels der Dosierpumpe (9) über die Dosierleitung (6) in das Wassersystem geleitet werden kann.

14. Dosieranlage nach einem der Ansprüche 7 bis 13, **dadurch gekennzeichnet, dass** die Dosieranlage eine mit dem Mischbehälter (1) und dem Wassersystem in Verbindung stehende Dosierleitung (6) enthält, wobei die Dosierleitung (6) mit einer Sammeleinrichtung (60) in Verbindung steht, in der sich Ausfällungen und nicht gelöste Feststoffpartikel der wässrigen Lösung oder Suspension, insbesondere durch Sedimentation und bevorzugt schwerkraftbedingt, absetzen, wobei die Sammeleinrichtung (60) bevorzugt einen Sammelbehälter (61) umfasst, in dem sich die Ausfällungen und nicht gelöste Feststoffpartikel der wässrigen Lösung oder Suspension ansammeln können.

15. Dosieranlage nach einem der Ansprüche 7 bis 14, **dadurch gekennzeichnet, dass** die Dosierleitung (6) mit einer Spüleinrichtung (64) gekoppelt oder koppelbar ist, um eine Spülflüssigkeit in oder durch die Sammeleinrichtung (60) zu fördern, wobei als Spülflüssigkeit insbesondere Wasser und bevorzugt Wasser aus dem Wassersystem und besonders bevorzugt Wasser, welches durch den Behälter (4) geleitet worden ist, verwendet wird.
